# EUROPEAN PATENT APPLICATION

(11) **EP 4 404 339 A1**
(43) Date of publication of application: **24.07.2024**
(21) Application number: 22870030.8
(22) Date of filing: 15.09.2022
(51) Int. Cl.: H01M 50/105, H01G 11/78, H01M 50/121, H01M 50/129, H01M 50/134

(54) **EXTERIOR MATERIAL FOR POWER STORAGE DEVICE, PRODUCTION METHOD THEREFOR, FILM, AND POWER STORAGE DEVICE**

(30) Priority: 15.09.2021 JP 2021150660
(71) Applicant: DAI NIPPON PRINTING CO., LTD., Tokyo 162-8001 (JP)
(72) Inventor: KAGATA, Tsubasa, Tokyo 162-8001 (JP); TABUCHI, Naoto, Tokyo 162-8001 (JP); SASAKI, Miho, Tokyo 162-8001 (JP); OKANO, Ai, Tokyo 162-8001 (JP)
(74) Representative: Müller-Boré & Partner Patentanwälte PartG mbB
(86) International application number: PCT/JP2022/034593
(87) International publication number: WO 2023/042883

(57) **Abstract**

A power storage device packaging material, comprising a laminate comprising at least a base material layer, a barrier layer, and a heat-sealable resin layer in this order, wherein the heat-sealable resin layer comprises a film, the film is formed of a resin containing three or more structural units, and the film has a melting peak temperature of 170°C or more.

## Description

### Technical Field

The present disclosure relates to a power storage device packaging material, a method for producing the same, a film, and a power storage device.

### Background Art

Various types of power storage devices have been heretofore developed. In every power storage device, a packaging material is an essential member for sealing a power storage device element including electrodes, an electrolyte, and the like. Metallic packaging materials have heretofore been widely used as power storage device packaging materials.

In recent years, along with improvements in the performance of electric cars, hybrid electric cars, personal computers, cameras, mobile phones, and the like, power storage devices have been required to be diversified in shape and also to be thinner and lighter weight. However, the widely used metallic power storage device packaging materials are disadvantageous in that they have difficulty in keeping up with the diversification of shapes and are limited in weight reduction.

Thus, a film-shaped laminate in which a base material layer/a barrier layer/a heat-sealable resin layer are laminated in this order has been recently proposed as a power storage device packaging material that can be readily processed into various shapes and can achieve a thickness reduction and a weight reduction (see, for example, Patent Literature 1).

In such a power storage device packaging material, commonly, a concave portion is formed by cold forming, a power storage device element including electrodes, an electrolytic solution, and the like is disposed in the space formed by the concave portion, and the heat-sealable resin layers are heat-sealed. This results in a power storage device in which the power storage device element is housed inside the power storage device packaging material.

### Citation List

### Patent Literature

Patent Literature 1: JP-A-2008-287971

### Summary of Invention

### Technical Problem

With the recent advancement of IoT, various types of IoT devices are available on the market. Some types of IoT devices are intended to be used in a wide range of temperature environments from low to high temperatures. Therefore, power storage devices mounted on such IoT devices are also required to be durable over the wide range of temperatures. For example, among vehicle-mounted electronic devices, IoT devices that acquire data from places such as engine compartments may be required to be durable in a high-temperature environment as high as 125°C.

Among power storage devices, for example, lithium-ion batteries, in which an electrolytic solution containing an organic solvent is used, are not intended to be used at a temperature equal to or above the boiling point of the solvent of the electrolytic solution. In contrast, all-solid-state batteries, in which a solid electrolyte is used, can be used in a higher temperature environment, as compared to current lithium-ion batteries and the like, and can meet the demand on the IoT devices for use in a wide range of temperature environments as described above.

For example, it is believed that rapid charging is achieved by using an all-solid-state battery as a battery for driving an electric car, and heating the all-solid-state battery during charging. This high-temperature environment due to heating is also a high-temperature environment in which current lithium-ion batteries are not used. Therefore, all-solid-state battery packaging materials are also required to be durable in a wide range of temperature environments.

In a conventional electrolytic solution lithium-ion battery that contains an organic solvent, a film such as a polypropylene film is used as the heat-sealable resin layer of the packaging material and undergoes significant reduction in durability (sealing strength) in a high-temperature environment of 100°C or more. Moreover, batteries such as a battery for driving an electric car are exposed not only to a high-temperature environment but also to a low-temperature environment. Thus, even at low temperatures, gas-tightness of the batteries need to be maintained, that is, the sealing strength needs to be maintained at a certain level or more. However, a power storage device packaging material in which a polypropylene film or the like is used as the heat-sealable resin layer has poor durability in a high-temperature environment. On the other hand, for example, instead of a polypropylene film, if a film with high durability in a high-temperature environment, such as a polyester film, is used, the film has poor durability in a low-temperature environment (for example, about -30°C). Thus, conventional films used as the heat-sealable resin layer are not sufficiently applicable to power storage devices for use in a wide range of temperature environments from low to high temperatures (for example, in the range from -30 to 150°C).

Under such circumstances, it is a main object of the present disclosure to provide a power storage device packaging material that can exhibit a high sealing strength in a wide range of temperature environments from low to high temperatures. It is also an object of the present disclosure to provide a method for producing the power storage device packaging material and a power storage device including the power storage device packaging material. Furthermore, it is also an object of the present disclosure to provide a film that can exhibit a high sealing strength in a wide range of temperature environments from low to high temperatures.

### Solution to Problem

The inventors of the present disclosure have conducted extensive research to solve the problem as described above. As a result, they have found that a power storage device packaging material, comprising a laminate comprising at least a base material layer, a barrier layer, and a heat-sealable resin layer in this order, wherein the heat-sealable resin layer comprises a film, the film is formed of a resin containing three or more structural units, and the film has a melting peak temperature of 170°C or more, exhibits a high sealing strength in a wide range of temperature environments from low to high temperatures (for example, in the range from -30 to 150°C).

The present disclosure has been completed as a result of further research based on these novel findings. In summary, the present disclosure provides an aspect of the invention as set forth below:
A power storage device packaging material, comprising a laminate comprising at least a base material layer, a barrier layer, and a heat-sealable resin layer in this order,
wherein the heat-sealable resin layer comprises a film,
the film is formed of a resin containing three or more structural units, and
the film has a melting peak temperature of 170°C or more.

### Advantageous Effects of Invention

According to the present disclosure, it is possible to provide a power storage device packaging material that can exhibit a high sealing strength in a wide range of temperature environments from low to high temperatures. Moreover, according to the present disclosure, it is also possible to provide a method for producing the power storage device packaging material and a power storage device including the power storage device packaging material. Furthermore, it is also possible to provide a film that can exhibit a high sealing strength in a wide range of temperature environments from low to high temperatures.

### Brief Description of Drawings

FIG. 1 is a schematic diagram showing one exemplary cross-sectional structure of a power storage device packaging material of the present disclosure.
FIG. 2 is a schematic diagram showing one exemplary cross-sectional structure of a power storage device packaging material of the present disclosure.
FIG. 3 is a schematic diagram showing one exemplary cross-sectional structure of a power storage device packaging material of the present disclosure.
FIG. 4 is a schematic diagram showing one exemplary cross-sectional structure of a power storage device packaging material of the present disclosure.
FIG. 5 is a schematic diagram showing one exemplary cross-sectional structure of a heat-sealable resin layer (film) of a power storage device packaging material of the present disclosure.
FIG. 6 is a schematic diagram showing one exemplary cross-sectional structure of a heat-sealable resin layer (including the film) of a power storage device packaging material of the present disclosure.
FIG. 7 is a schematic diagram showing one exemplary cross-sectional structure of a heat-sealable resin layer (including the film) of a power storage device packaging material of the present disclosure.
FIG. 8 is a schematic diagram for illustrating a method of housing a power storage device element in a package formed of a power storage device packaging material of the present disclosure.
FIG. 9 is a schematic diagram for illustrating a method of measuring sealing strength.
FIG. 10 is a schematic diagram for illustrating a method of measuring sealing strength.

### Description of Embodiments

A power storage device packaging material of the present disclosure comprises a laminate comprising at least a base material layer, a barrier layer, and a heat-sealable resin layer in this order, wherein the heat-sealable resin layer comprises a film, the film is formed of a resin containing three or more structural units, and the film has a melting peak temperature of 170°C or more. The power storage device packaging material of the present disclosure can exhibit a high sealing strength in a wide range of temperature environments from low to high temperatures.

The power storage device packaging material of the present disclosure will be hereinafter described in detail. In the present specification, any numerical range indicated by "... to ..." is intended to mean "... or more" and "... or less". For example, the recitation "2 to 15 mm" is intended to mean 2 mm or more and 15 mm or less.

### 1. Laminated Structure of the Power Storage Device Packaging Material

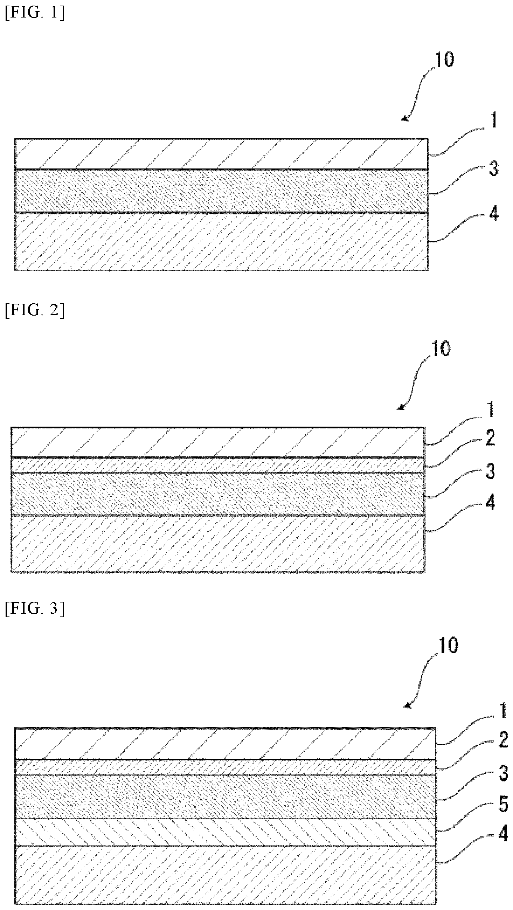

As shown in FIG. 1, for example, a power storage device packaging material 10 of the present disclosure comprises a laminate comprising at least a base material layer 1, a barrier layer 3, and a heat-sealable resin layer 4 in this order. In the power storage device packaging material 10, the base material layer 1 is the outermost layer, and the heat-sealable resin layer 4 is the innermost layer. During the assembly of a power storage device using the power storage device packaging material 10 and a power storage device element, the power storage device element is housed in a space formed by heat-sealing peripheral regions of the opposing heat-sealable resin layers 4 of the power storage device packaging material 10. In the laminate constituting the power storage device packaging material 10 of the present disclosure, when the barrier layer 3 is used as the reference, the heat-sealable resin layer 4 side relative to the barrier layer 3 is defined as the inner side, and the base material layer 1 side relative to the barrier layer 3 is defined as the outer side.

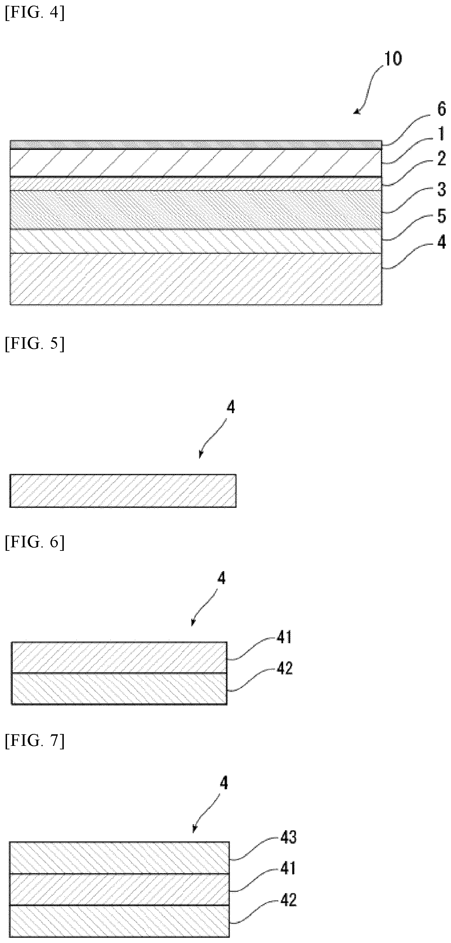

As shown in FIGS. 2 to 4, for example, the power storage device packaging material 10 may optionally have an adhesive agent layer 2 between the base material layer 1 and the barrier layer 3, for the purpose of, for example, improving the adhesiveness between these layers. Moreover, as shown in FIGS. 3 and 4, for example, the power storage device packaging material 10 may also optionally have an adhesive layer 5 between the barrier layer 3 and the heat-sealable resin layer 4, for the purpose of, for example, improving the adhesiveness between these layers. Furthermore, as shown in FIG. 4, a surface coating layer 6 or the like may be optionally provided on an outer side of the base material layer 1 (opposite to the heat-sealable resin layer 4 side).

In the power storage device packaging material 10 of the present disclosure, the heat-sealable resin layer 4 comprises a film. When the heat-sealable resin layer 4 is composed of a single layer, the heat-sealable resin layer 4 is composed of the film. When the heat-sealable resin layer 4 is composed of two or more layers, at least one of the layers contained in the heat-sealable resin layer 4 is composed of the film. As described below, when the heat-sealable resin layer 4 is composed of two or more layers, the surface of the heat-sealable resin layer 4 opposite to the barrier layer 3 side (i.e., the innermost layer surface of the power storage device packaging material 10) is preferably formed of the film.

While the thickness of the laminate constituting the power storage device packaging material 10 is not specifically limited, it is, for example, about 190 µm or less, and preferably about 180 µm or less, about 155 µm or less, or about 120 µm or less, in view of reducing costs or improving the energy density, for example. On the other hand, in view of maintaining the function of the power storage device packaging material to protect the power storage device element, the thickness of the laminate constituting the power storage device packaging material 10 is preferably about 35 µm or more, about 45 µm or more, or about 60 µm or more. Preferred ranges of the laminate constituting the power storage device packaging material 10 include, for example, from about 35 to 190 µm, from about 35 to 180 µm, from about 35 to 155 µm, from about 35 to 120 µm, from about 45 to 190 µm, from about 45 to 180 µm, from about 45 to 155 µm, from about 45 to 120 µm, from about 60 to 190 µm, from about 60 to 180 µm, from about 60 to 155 µm, and from about 60 to 120 µm, with the range of about 60 to 155 µm being particularly preferred.

The power storage device packaging material 10 is suitable for application to an all-solid-state battery. In this case, while the thickness of the laminate constituting the power storage device packaging material 10 is not specifically limited, it is, for example, preferably about 10000 µm or less, about 8000 µm or less, or about 5000 µm or less, in view of reducing costs or improving the energy density, for example. On the other hand, in view of maintaining the function of the all-solid-state battery packaging material to protect the battery element, the thickness of the laminate constituting the power storage device packaging material 10 is preferably about 10 µm or more, about 15 µm or more, or about 20 µm or more. Preferred ranges include, for example, from about 10 to 10000 µm, from about 10 to 8000 µm, from about 10 to 5000 µm, from about 15 to 10000 µm, from about 15 to 8000 µm, from about 15 to 5000 µm, from about 20 to 10000 µm, from about 20 to 8000 µm, and from about 20 to 5000 µm, with the range of about 20 to 5000 µm being particularly preferred.

In the power storage device packaging material 10, a ratio of the total thickness of the base material layer 1, the optional adhesive agent layer 2, the barrier layer 3, the optional adhesive layer 5, the heat-sealable resin layer 4, and the optional surface coating layer 6, relative to the thickness (entire thickness) of the laminate constituting the power storage device packaging material 10, is preferably 90% or more, more preferably 95% or more, and still more preferably 98% or more. As a specific example, when the power storage device packaging material 10 of the present disclosure includes the base material layer 1, the adhesive agent layer 2, the barrier layer 3, the adhesive layer 5, and the heat-sealable resin layer 4, the ratio of the total thickness of these layers relative to the thickness (entire thickness) of the laminate constituting the power storage device packaging material 10 is preferably 90% or more, more preferably 95% or more, and still more preferably 98% or more. Similarly when the power storage device packaging material 10 of the present disclosure is a laminate including the base material layer 1, the adhesive agent layer 2, the barrier layer 3, and the heat-sealable resin layer 4, the ratio of the total thickness of these layers relative to the thickness (entire thickness) of the laminate constituting the power storage device packaging material 10 may be, for example, 80% or more, preferably 90% or more, more preferably 95% or more, and still more preferably 98% or more.

The power storage device packaging material 10 of the present disclosure preferably has a sealing strength in a -30°C environment of 40 N/15 mm or more, more preferably 80 N/15 mm or more, as measured using the below-described measurement method. The upper limit of the sealing strength is, for example, 200 N/15 mm or less, and preferably 180 N/15 mm or less. Preferred ranges of the sealing strength include from about 40 to 200 N/15 mm, from about 40 to 180 N/15 mm, from about 80 to 200 N/15 mm, and from about 80 to 180 N/15 mm.

Also, the power storage device packaging material 10 of the present disclosure preferably has a sealing strength in a 23°C environment of 40 N/15 mm or more, more preferably 80 N/15 mm or more, as measured using the below-described measurement method. The upper limit of the sealing strength is, for example, 200 N/15 mm or less, and preferably 180 N/15 mm or less. Preferred ranges of the sealing strength include from about 40 to 200 N/15 mm, from about 40 to 180 N, from about 80 to 200 N/15 mm, and from about 80 to 180 N/15 mm.

Moreover, the power storage device packaging material 10 of the present disclosure preferably has a sealing strength in a 120°C environment of 30 N/15 mm or more, more preferably 50 N/15 mm or more, as measured using the below-described measurement method. The upper limit of the sealing strength is, for example, 150 N/15 mm or less, and preferably 120 N/15 mm or less. Preferred ranges of the sealing strength include from about 30 to 150 N/15 mm, from about 30 to 120 N/15 mm, from about 50 to 150 N/15 mm, and from about 50 to 120 N/15 mm.

Furthermore, the power storage device packaging material 10 of the present disclosure preferably has a sealing strength in a 150°C environment of 30 N/15 mm or more, more preferably 50 N/15 mm or more, as measured using the below-described measurement method. The upper limit of the sealing strength is, for example, 150 N/15 mm or less, and preferably 120 N/15 mm or less. Preferred ranges of the sealing strength include from about 30 to 150 N/15 mm, from about 30 to 120 N/15 mm, from about 50 to 150 N/15 mm, and from about 50 to 120 N/15 mm.

### [Measurement of Sealing Strength (in a -30°C, 23°C, 120°C, or 150°C Environment)]

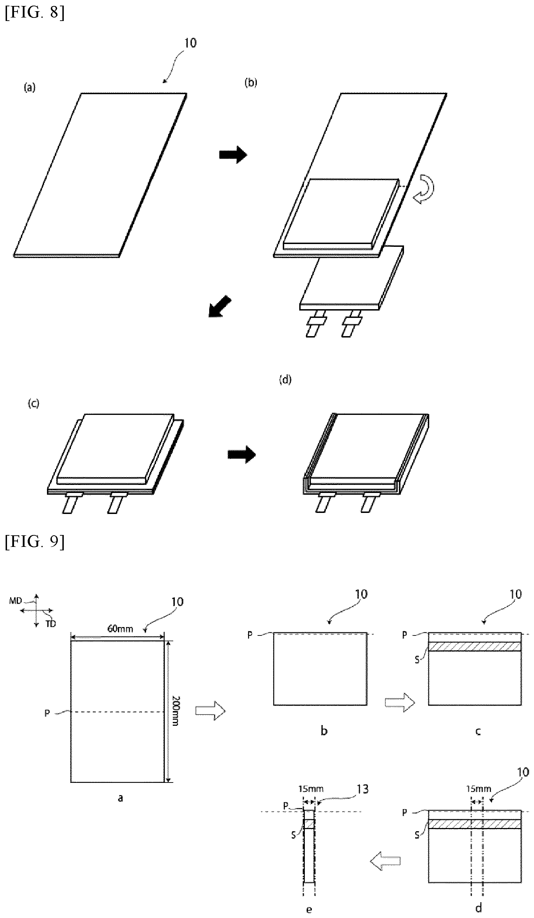

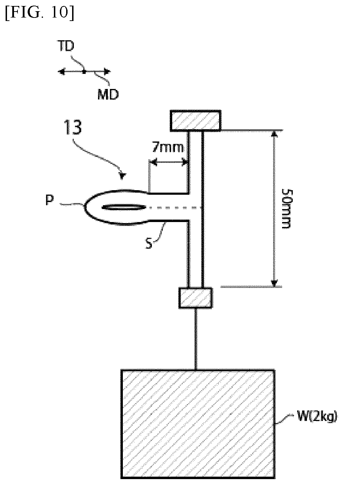

The sealing strength of the packaging material at a measurement temperature of -30°C, 23°C, 120°C, or 150°C is measured according to JIS K7127:1999, as follows: A test sample is prepared by cutting the packaging material into a strip with a width of 15 mm in the TD direction. Specifically, as shown in FIG. 9, first, each packaging material is cut into 60 mm (TD direction) × 200 mm (MD direction) (FIG. 9a). Subsequently, the packaging material is folded in half in the MD direction at the position of the fold P (midpoint in the MD direction), in such a manner that the heat-sealable resin layers are opposed to each other (FIG. 9b). At about 10 mm inward in the MD direction from the fold P, the heat-sealable resin layers are heat-sealed to each other at a seal width of 7 mm and a temperature of 240°C, using a surface pressure and a sealing time such that the thickness of the heat-sealable resin layers decreases to 80 ± 5% of the thickness before sealing (FIG. 9c). In FIG. 9c, the shaded region S is the heat-sealed region. Subsequently, the packaging material is cut in the MD direction to give a width of 15 mm in the TD direction (cut at the positions indicated by the double-dotted lines in FIG. 9d) to give a specimen 13 (FIG. 9e). Subsequently, after the specimen 13 is allowed to stand at each measurement temperature for 2 minutes, the heat-sealable resin layers at the heat-sealed region are peeled at a speed of 300 mm/min, using a tensile testing machine, in each measurement temperature environment (FIG. 10). The maximum strength at the time of peeling is defined as the sealing strength (N/15 mm). The distance between the chucks is 50 mm.

### 2. Layers Forming the Power Storage Device Packaging Material

### [Base Material Layer 1]

In the present disclosure, the base material layer 1 is a layer provided for the purpose of, for example, functioning as a base material of the power storage device packaging material. The base material layer 1 is positioned as the outermost layer of the power storage device packaging material.

The material forming the base material layer 1 is not specifically limited as long as it functions as a base material, i.e., has at least insulation properties. The base material layer 1 may be formed using a resin, for example, and the resin may contain additives as described below.

When the base material layer 1 is formed of a resin, the base material layer 1 may be formed of a resin film, for example. When the base material layer 1 is formed of a resin film, a pre-formed resin film may be used as the base material layer 1, during lamination of the base material layer 1 with the barrier layer 3 or the like to produce the power storage device packaging material 10 of the present disclosure. Alternatively, the resin forming the base material layer 1 may be formed into a film on a surface of the barrier layer 3 or the like by extrusion, coating, or the like, and used as the base material layer 1 formed of a resin film. The resin film may be an unstretched film or a stretched film. Examples of the stretched film include a uniaxially stretched film and a biaxially stretched film, with a biaxially stretched film being preferred. Examples of stretching methods for forming a biaxially stretched film include a sequential biaxial stretching method, an inflation method, and a simultaneous biaxial stretching method. Examples of methods of applying the resin include a roll coating method, a gravure coating method, and an extrusion coating method.

Examples of the resin forming the base material layer 1 include resins such as polyesters, polyamides, polyolefins, epoxy resins, acrylic resins, fluororesins, polyurethanes, silicone resins, and phenol resins, as well as modified resins thereof. The resin forming the base material layer 1 may also be a copolymer of these resins or a modified copolymer thereof. The resin forming the base material layer 1 may also be a mixture of these resins.

The base material layer 1 preferably contains these resins as a main component, and more preferably contains a polyester or a polyamide as a main component. As used herein, the term "main component" means a resin component whose content is, for example, 50% by mass or more, preferably 60% by mass or more, more preferably 70% by mass or more, still more preferably 80% by mass or more, even more preferably 90% by mass or more, still more preferably 95% by mass or more, even more preferably 98% by mass or more, and still more preferably 99% by mass or more, among the resin components contained in the base material layer 1. For example, the phrase "the base material layer 1 contains a polyester or a polyamide as a main component" means that the polyester or polyamide content is, for example, 50% by mass or more, preferably 60% by mass or more, more preferably 70% by mass or more, still more preferably 80% by mass or more, even more preferably 90% by mass or more, still more preferably 95% by mass or more, even more preferably 98% by mass or more, and still more preferably 99% by mass or more, among the resin components contained in the base material layer 1.

Among these, the resin forming the base material layer 1 is preferably a polyester or a polyamide, and more preferably a polyester (particularly preferably polyethylene terephthalate).

Specific examples of polyesters include polyethylene terephthalate, polybutylene terephthalate, polyethylene naphthalate, polybutylene naphthalate, polyethylene isophthalate, and copolyesters. Examples of copolyesters include copolyesters containing ethylene terephthalate as a main repeating unit. Specific examples of these copolyesters include copolyesters obtained by polymerizing ethylene terephthalate as a main repeating unit with ethylene isophthalate (abbreviated as polyethylene (terephthalate/isophthalate); hereinafter similarly abbreviated), polyethylene (terephthalate/adipate), polyethylene (terephthalate/sodium sulfoisophthalate), polyethylene (terephthalate/sodium isophthalate), polyethylene (terephthalate/phenyl-dicarboxylate), and polyethylene (terephthalate/decane dicarboxylate). These polyesters may be used alone or in combination.

Specific examples of polyamides include aliphatic polyamides, such as nylon 6, nylon 66, nylon 610, nylon 12, nylon 46, and copolymers of nylon 6 and nylon 66; hexamethylenediamine-isophthalic acid-terephthalic acid copolyamides containing structural units derived from terephthalic acid and/or isophthalic acid, for example, nylon 6I, nylon 6T, nylon 6IT, and nylon 6I6T (I denotes isophthalic acid, and T denotes terephthalic acid), and polyamides containing aromatics, such as polyamide MXD6 (polymethaxylylene adipamide); cycloaliphatic polyamides, such as polyamide PACM6 (polybis(4-aminocyclohexyl)methane adipamide); polyamides copolymerized with a lactam component or an isocyanate component such as 4,4'-diphenylmethane-diisocyanate, and polyester amide copolymers or polyether ester amide copolymers that are copolymers of copolyamides with polyesters or polyalkylene ether glycols; and copolymers thereof. These polyamides may be used alone or in combination.

The base material layer 1 preferably contains at least one of a polyester film, a polyamide film, and a polyolefin film, preferably contains at least one of a stretched polyester film, a stretched polyamide film, and a stretched polyolefin film, more preferably contains at least one of a stretched polyethylene terephthalate film, a stretched polybutylene terephthalate film, a stretched nylon film, and a stretched polypropylene film, and more preferably contains at least one of a biaxially stretched polyethylene terephthalate film, a biaxially stretched polybutylene terephthalate film, a biaxially stretched nylon film, and a biaxially stretched polypropylene film.

The base material layer 1 may be a single layer, or may be composed of two or more layers. When the base material layer 1 is composed of two or more layers, the base material layer 1 may be a laminate in which resin films are laminated with an adhesive or the like, or may be a laminate of two or more layers of resin films formed by co-extruding resins. The laminate of two or more layers of resin films formed by co-extruding resins may be used in an unstretched state as the base material layer 1, or may be uniaxially or biaxially stretched and used as the base material layer 1.

Specific examples of laminates of two or more layers of resin films in the base material layer 1 include a laminate of a polyester film and a nylon film, a laminate of two or more layers of nylon films, and a laminate of two or more layers of polyester films. Preferred are a laminate of a stretched nylon film and a stretched polyester film, a laminate of two or more layers of stretched nylon films, and a laminate of two or more layers of stretched polyester films. For example, when the base material layer 1 is a laminate of two layers of resin films, it is preferably a laminate of a polyester resin film and a polyester resin film, a laminate of a polyamide resin film and a polyamide resin film, or a laminate of a polyester resin film and a polyamide resin film, and more preferably a laminate of a polyethylene terephthalate film and a polyethylene terephthalate film, a laminate of a nylon film and a nylon film, or a laminate of a polyethylene terephthalate film and a nylon film. When the base material layer 1 is a laminate of two or more layers of resin films, the polyester resin film is preferably positioned as the outermost layer of the base material layer 1, because the polyester resin is resistant to discoloration when, for example, the electrolytic solution adheres to the surface.

When the base material layer 1 is a laminate of two or more layers of resin films, the two or more layers of resin films may be laminated via an adhesive. Examples of preferred adhesives are the same adhesives as those exemplified for the adhesive agent layer 2 described below. The method of laminating two or more layers of resin films is not specifically limited and may be any of known methods, for example, dry lamination, sandwich lamination, extrusion lamination, and thermal lamination, preferably dry lamination. When the lamination is performed using dry lamination, a polyurethane adhesive is preferably used as an adhesive. In this case, the thickness of the adhesive is, for example, about 2 to 5 µm. Alternatively, the resin films may be coated with an anchor coat layer to be laminated. Examples of the anchor coat layer are the same adhesives as those exemplified for the adhesive agent layer 2 described below. In this case, the thickness of the anchor coat layer is, for example, about 0.01 to 1.0 µm.

Additives such as lubricants, flame retardants, anti-blocking agents, antioxidants, light stabilizers, tackifiers, and anti-static agents may be present on at least one of the surface and the inside of the base material layer 1. A single additive may be used alone, or a mixture of two or more additives may be used.

In the present disclosure, preferably, a lubricant is present on at least one of the surface and the inside of the base material layer 1, in view of improving the moldability of the power storage device packaging material. While the lubricant is not specifically limited, it is preferably an amide-based lubricant. Specific examples of amide-based lubricants include saturated fatty acid amides, unsaturated fatty acid amides, substituted amides, methylol amides, saturated fatty acid bis-amides, unsaturated fatty acid bis-amides, fatty acid ester amides, and aromatic bis-amides. Specific examples of saturated fatty acid amides include lauramide, palmitamide, stearamide, behenamide, and hydroxystearamide. Specific examples of unsaturated fatty acid amides include oleamide and erucamide. Specific examples of substituted amides include N-oleyl palmitamide, N-stearyl stearamide, N-stearyl oleamide, N-oleyl stearamide, and N-stearyl erucamide. Specific examples of methylol amides include methylol stearamide. Specific examples of saturated fatty acid bis-amides include methylene-bis-stearamide, ethylene-bis-capramide, ethylene-bis-lauramide, ethylene-bis-stearamide, ethylene-bis-hydroxystearamide, ethylene-bis-behenamide, hexamethylene-bis-stearamide, hexamethylene-bis-behenamide, hexamethylene hydroxystearamide, N,N'-distearyl adipamide, and N,N'-distearyl sebacamide. Specific examples of unsaturated fatty acid bis-amides include ethylene-bis-oleamide, ethylene-bis-erucamide, hexamethylene-bis-oleamide, N,N'-dioleyl adipamide, and N,N'-dioleyl sebacamide. Specific examples of fatty acid ester amides include stearamide ethyl stearate. Specific examples of aromatic bis-amides include m-xylylene-bis-stearamide, m-xylylene-bis-hydroxystearamide, and N,N'-distearyl isophthalamide. A single lubricant may be used alone, or a combination of two or more lubricants may be used, with a combination of two or more lubricants being preferred.

When a lubricant is present on the surface of the base material layer 1, the amount of the lubricant present is not specifically limited but is preferably about 3 mg/m² or more, more preferably about 4 to 15 mg/m², and still more preferably about 5 to 14 mg/m².

The lubricant present on the surface of the base material layer 1 may be exuded from the lubricant contained in the resin forming the base material layer 1, or may be applied to the surface of the base material layer 1.

While the thickness of the base material layer 1 is not specifically limited as long as the function as a base material is exhibited, it is, for example, about 3 to 50 µm, and preferably about 10 to 35 µm. When the base material layer 1 is a laminate of two or more layers of resin films, the thickness of the resin film constituting each layer is preferably about 2 to 25 µm.

### [Adhesive Agent Layer 2]

In the power storage device packaging material of the present disclosure, the adhesive agent layer 2 is a layer that is optionally provided between the base material layer 1 and the barrier layer 3, for the purpose of improving the adhesiveness between these layers.

The adhesive agent layer 2 is formed of an adhesive capable of bonding the base material layer 1 and the barrier layer 3. While the adhesive used for forming the adhesive agent layer 2 is not limited, it may be any of a chemical reaction type, a solvent volatilization type, a heat melting type, a heat pressing type, and the like. The adhesive may also be a two-component curable adhesive (two-component adhesive), a one-component curable adhesive (one-component adhesive), or a resin that does not involve a curing reaction. The adhesive agent layer 2 may be composed of a single layer or a plurality of layers.

Specific examples of adhesive components contained in the adhesive include polyesters, such as polyethylene terephthalate, polybutylene terephthalate, polyethylene naphthalate, polybutylene naphthalate, polyethylene isophthalate, and copolyesters; polyethers; polyurethanes; epoxy resins; phenol resins; polyamides, such as nylon 6, nylon 66, nylon 12, and copolyamides; polyolefin resins, such as polyolefins, cyclic polyolefins, acid-modified polyolefins, and acid-modified cyclic polyolefins; polyvinyl acetates; celluloses; (meth)acrylic resins; polyimides; polycarbonates; amino resins, such as urea resins and melamine resins; rubbers, such as chloroprene rubber, nitrile rubber, and styrene-butadiene rubber; and silicone resins. These adhesive components may be used alone or in combination. Preferred among these adhesive components is a polyurethane adhesive, for example. Moreover, the resin that serves as the adhesive component can be used in combination with an appropriate curing agent to improve the adhesive strength. The curing agent is appropriately selected from a polyisocyanate, a polyfunctional epoxy resin, an oxazoline group-containing polymer, a polyamine resin, an acid anhydride, and the like, according to the functional group of the adhesive component.

The polyurethane adhesive may be, for example, a polyurethane adhesive that contains a first agent containing a polyol compound and a second agent containing an isocyanate compound. The polyurethane adhesive is preferably a two-component curable polyurethane adhesive containing a polyol such as a polyester polyol, a polyether polyol, or an acrylic polyol as the first agent, and an aromatic or aliphatic polyisocyanate as the second agent. The polyurethane adhesive may also be, for example, a polyurethane adhesive that contains a polyurethane compound obtained beforehand by reacting a polyol compound and an isocyanate compound, and an isocyanate compound. The polyurethane adhesive may also be, for example, a polyurethane adhesive that contains a polyurethane compound obtained beforehand by reacting a polyol compound and an isocyanate compound, and a polyol compound. The polyurethane adhesive may also be, for example, a polyurethane adhesive produced by curing a polyurethane compound obtained beforehand by reacting a polyol compound and an isocyanate compound, by reacting with moisture such as moisture in the air. The polyol compound is preferably a polyester polyol having a hydroxy group at a side chain, in addition to the hydroxy groups at the ends of the repeating unit. Examples of the second agent include aliphatic, alicyclic, aromatic, and aromatic and aliphatic isocyanate compounds. Examples of isocyanate compounds include hexamethylene diisocyanate (HDI), xylylene diisocyanate (XDI), isophorone diisocyanate (IPDI), hydrogenated XDI (H6XDI), hydrogenated MDI (H12MDI), tolylene diisocyanate (TDI), diphenylmethane diisocyanate (MDI), and naphthalene diisocyanate (NDI). Examples also include modified polyfunctional isocyanates obtained from one, or two or more of these diisocyanates. A multimer (for example, a trimer) may also be used as a polyisocyanate compound. Examples of such multimers include adducts, biurets, and isocyanurates. When the adhesive agent layer 2 is formed of a polyurethane adhesive, the power storage device packaging material is provided with excellent electrolytic solution resistance, which prevents the base material layer 1 from peeling off even if the electrolytic solution adheres to the side surface.

The adhesive agent layer 2 may be blended with other components as long as they do not interfere with adhesiveness, and may contain colorants, thermoplastic elastomers, tackifiers, fillers, and the like. When the adhesive agent layer 2 contains a colorant, the power storage device packaging material can be colored. The colorant may be any of known colorants, such as a pigment or a dye. A single colorant may be used, or a mixture of two or more colorants may be used.

The type of pigment is not specifically limited as long as it does not interfere with the adhesiveness of the adhesive agent layer 2. Examples of organic pigments include azo-based, phthalocyanine-based, quinacridone-based, anthraquinone-based, dioxazine-based, indigo/thioindigo-based, perinone-perylene-based, isoindolenine-based, and benzimidazolone-based pigments. Examples of inorganic pigments include carbon black-based, titanium oxide-based, cadmium-based, lead-based, chromium oxide-based, and iron-based pigments. Other examples include mica powder and fish scale flakes.

Among these colorants, carbon black is preferred, in order to make the external appearance of the power storage device packaging material black, for example.

The average particle diameter of the pigment is not specifically limited and may be, for example, about 0.05 to 5 µm, and preferably about 0.08 to 2 µm. The average particle diameter of the pigment is the median diameter as measured using a laser diffraction/scattering particle size distribution analyzer.

The pigment content in the adhesive agent layer 2 is not specifically limited as long as the power storage device packaging material is colored; for example, it is about 5 to 60% by mass, and preferably 10 to 40% by mass.

While the thickness of the adhesive agent layer 2 is not specifically limited as long as the base material layer 1 and the barrier layer 3 can be bonded, it is, for example, about 1 µm or more or about 2 µm or more. On the other hand, the thickness of the adhesive agent layer 2 is, for example, about 10 µm or less or about 5 µm or less. Preferred ranges of the thickness of the adhesive agent layer 2 include from about 1 to 10 µm, from about 1 to 5 µm, from about 2 to 10 µm, and from about 2 to 5 µm.

### [Coloring Layer]

A coloring layer (not illustrated) is a layer that is optionally provided between the base material layer 1 and the barrier layer 3. When the adhesive agent layer 2 is provided, the coloring layer may be provided between the base material layer 1 and the adhesive agent layer 2 or between the adhesive agent layer 2 and the barrier layer 3. Alternatively, the coloring layer may be provided on the outer side of the base material layer 1. The power storage device packaging material can be colored by providing the coloring layer.

The coloring layer can be formed, for example, by applying an ink containing a colorant to the surface of the base material layer 1 or the surface of the barrier layer 3. The colorant may be any of known colorants, such as a pigment or a dye. A single colorant may be used, or a mixture of two or more colorants may be used.

Specific examples of the colorant contained in the coloring layer are the same as those exemplified in the [Adhesive Agent Layer 2] section.

### [Barrier Layer 3]

In the power storage device packaging material, the barrier layer 3 is a layer that at least prevents the ingress of moisture.

The barrier layer 3 may be, for example, a metal foil, a vapor-deposited film, or a resin layer having barrier properties. Examples of the vapor-deposited film include a vapor-deposited metal film, a vapor-deposited inorganic oxide film, and a vapor-deposited carbon-containing inorganic oxide film. Examples of the resin layer include fluorine-containing resins, such as polyvinylidene chloride, polymers containing chlorotrifluoroethylene (CTFE) as a main component, polymers containing tetrafluoroethylene (TFE) as a main component, polymers with fluoroalkyl groups, and polymers with fluoroalkyl units as a main component; and ethylene-vinyl alcohol copolymers. The barrier layer 3 may also be, for example, a resin film having at least one of these vapor-deposited films and resin layers. A plurality of barrier layers 3 may be provided. The barrier layer 3 preferably includes a layer formed of a metal material. Specific examples of the metal material constituting the barrier layer 3 include aluminum alloys, stainless steel, titanium steel, and steel sheets. When the barrier layer 3 is a metal foil, it preferably contains at least one of an aluminum alloy foil and a stainless steel foil.

The aluminum alloy foil is more preferably a soft aluminum alloy foil formed of an annealed aluminum alloy, for example, in view of improving the moldability of the power storage device packaging material, and is more preferably an aluminum alloy foil containing iron, in view of further improving the moldability. In the aluminum alloy foil (100% by mass) containing iron, the iron content is preferably 0.1 to 9.0% by mass, and more preferably 0.5 to 2.0% by mass. When the iron content is 0.1% by mass or more, the power storage device packaging material can be provided with superior moldability. When the iron content is 9.0% by mass or less, the power storage device packaging material can be provided with superior flexibility. Examples of soft aluminum alloy foils include aluminum alloy foils having the compositions as defined in JIS H4160: 1994 A8021 H-O, JIS H4160: 1994 A8079 H-O, JIS H4000: 2014 A8021 P-O, and JIS H4000: 2014 A8079 P-O. These aluminum alloy foils may be optionally blended with silicon, magnesium, copper, manganese, and the like. The softening may be performed by annealing, for example.

Examples of the stainless steel foil include austenitic, ferritic, austenitic-ferritic, martensitic, and precipitation-hardening stainless steel foils. The stainless steel foil is preferably formed of an austenitic stainless steel, in view of providing the power storage device packaging material with superior moldability.

Specific examples of the austenitic stainless steel constituting the stainless steel foil include SUS304, SUS301, and SUS316L, with SUS304 being particularly preferred among the above.

The barrier layer 3 when it is a metal foil may have a thickness sufficient to exhibit at least the function of the barrier layer to prevent the ingress of moisture, and may have a thickness of, for example, about 9 to 200 µm. The thickness of the barrier layer 3 is preferably about 85 µm or less, more preferably about 50 µm or less, still more preferably about 40 µm or less, and particularly preferably about 35 µm or less. On the other hand, the thickness of the barrier layer 3 is preferably about 10 µm or more, more preferably about 20 µm or more, and still more preferably about 25 µm or more. Preferred ranges of the thickness of the barrier layer 3 include from about 10 to 85 µm, from about 10 to 50 µm, from about 10 to 40 µm, from about 10 to 35 µm, from about 20 to 85 µm, from about 20 to 50 µm, from about 20 to 40 µm, from about 20 to 35 µm, from about 25 to 85 µm, from about 25 to 50 µm, from about 25 to 40 µm, and from about 25 to 35 µm. When the barrier layer 3 is formed of an aluminum alloy foil, the above-defined ranges are particularly preferred. When the barrier layer 3 is formed of an aluminum alloy foil, the thickness of the barrier layer 3 is preferably about 45 µm or more, more preferably about 50 µm or more, and still more preferably about 55 µm or more, while it is preferably about 85 µm or less, more preferably 75 µm or less, and still more preferably 70 µm or less, in view of imparting higher moldability and higher rigidity to the power storage device packaging material 10. Preferred ranges include from about 45 to 85 µm, from about 45 to 75 µm, from about 45 to 70 µm, from about 50 to 85 µm, from about 50 to 75 µm, from about 50 to 70 µm, from about 55 to 85 µm, from about 55 to 75 µm, and from about 55 to 70 µm. With higher moldability, the power storage device packaging material 10 is easy to deep draw, which can contribute to an increased capacity of the power storage device. Furthermore, when the capacity of the power storage device is increased, the weight of the power storage device increases; however, higher rigidity of the power storage device packaging material 10 can contribute to higher hermeticity of the power storage device. In particular, when the barrier layer 3 is formed of a stainless steel foil, the thickness of the stainless steel foil is preferably about 60 µm or less, more preferably about 50 µm or less, still more preferably about 40 µm or less, even more preferably about 30 µm or less, and particularly preferably about 25 µm or less. On the other hand, the thickness of the stainless steel foil is preferably about 10 µm or more, and more preferably about 15 µm or more. Preferred ranges of the thickness of the stainless steel foil include from about 10 to 60 µm, from about 10 to 50 µm, from about 10 to 40 µm, from about 10 to 30 µm, from about 10 to 25 µm, from about 15 to 60 µm, from about 15 to 50 µm, from about 15 to 40 µm, from about 15 to 30 µm, and from about 15 to 25 µm.

When the barrier layer 3 is a metal foil, the barrier layer 3 preferably has a corrosion-resistant film at least on a surface opposite to the base material layer side, in order to prevent dissolution or corrosion, for example. The barrier layer 3 may have corrosion-resistant films on both surfaces. As used herein, the term "corrosion-resistant film" refers to, for example, a thin film that imparts corrosion resistance (for example, acid resistance and alkali resistance) to the barrier layer, and is formed by subjecting a surface of the barrier layer to, for example, hydrothermal conversion treatment such as boehmite treatment, chemical conversion treatment, anodic oxidation treatment, plating treatment with nickel, chromium, or the like, or anti-corrosion treatment of applying a coating preparation. Specifically, "corrosion-resistant film" means a film for improving the acid resistance of the barrier layer (acid-resistant film), a film for improving the alkali resistance of the barrier layer (alkali-resistant film), and the like. The treatments for forming the corrosion-resistant film may be performed alone or in combination. The corrosion-resistant film may be composed of a plurality of layers instead of a single layer. Among these treatments, the hydrothermal conversion treatment and the anodic oxidation treatment are treatments in which the surface of the metal foil is dissolved with a treatment agent to form a metal compound with excellent corrosion resistance. These treatments may be included in the definition of the chemical conversion treatment. When the barrier layer 3 has a corrosion-resistant film, the corrosion-resistant film is included in the barrier layer 3.

The corrosion-resistant film exhibits the effect of preventing delamination between the barrier layer (for example, an aluminum alloy foil) and the base material layer during molding of the power storage device packaging material, preventing dissolution or corrosion of the barrier layer surface, particularly dissolution or corrosion of aluminum oxide present on the barrier layer surface when the barrier layer is an aluminum alloy foil, due to hydrogen fluoride produced by the reaction between the electrolyte and moisture, and improving the adhesiveness (wettability) of the barrier layer surface to prevent delamination between the base material layer and the barrier layer during heat-sealing and prevent delamination between the base material layer and the barrier layer during molding.

Various corrosion-resistant films formed by the chemical conversion treatment are known, and typical examples include a corrosion-resistant film containing at least one of phosphates, chromates, fluorides, triazine-thiol compounds, and rare earth oxides. Examples of the chemical conversion treatment using phosphates and chromates include chromic acid chromate treatment, phosphoric acid chromate treatment, phosphate-chromate treatment, and chromate treatment. Examples of chromium compounds used in these treatments include chromium nitrate, chromium fluoride, chromium sulfate, chromium acetate, chromium oxalate, chromium biphosphate, acetylacetate chromate, chromium chloride, and chromium potassium sulfate. Examples of phosphorus compounds used in these treatments include sodium phosphate, potassium phosphate, ammonium phosphate, and polyphosphoric acid. Moreover, examples of chromate treatment include etching chromate treatment, electrolytic chromate treatment, and coating-type chromate treatment, with coating-type chromate treatment being preferred. Coating-type chromate treatment is performed as follows: Initially, at least the inner layer-side surface of the barrier layer (for example, an aluminum alloy foil) is subjected to degreasing treatment, using a well-known treatment method such as an alkali immersion method, an electrolytic cleaning method, an acid cleaning method, an electrolytic acid cleaning method, or an acid activation method. Then, a treatment solution containing, as a main component, a phosphoric acid metal salt such as Cr (chromium) phosphate, Ti (titanium) phosphate, Zr (zirconium) phosphate, or Zn (zinc) phosphate, or a mixture of these metal salts, or a treatment solution containing, as a main component, a phosphoric acid non-metal salt or a mixture of such non-metal salts, or a treatment solution containing a mixture of any of the above with a synthetic resin or the like, is applied to the degreasing treatment surface, using a well-known coating method such as a roll coating method, a gravure printing method, or an immersion method, and dried. The treatment solution may be formed using any of various solvents, such as, for example, water, alcohol solvents, hydrocarbon solvents, ketone solvents, ester solvents, and ether solvents, with water being preferred. The resin component to be used here may be, for example, a polymer such as a phenolic resin or an acrylic resin, and chromate treatment using an aminated phenol polymer having any of the repeating units represented by general formulae (1) to (4) shown below may be employed, for example. The aminated phenol polymer may contain one of or any combination of two or more of the repeating units represented by general formulae (1) to (4). The acrylic resin is preferably polyacrylic acid, an acrylic acid-methacrylic acid ester copolymer, an acrylic acid-maleic acid copolymer, an acrylic acid-styrene copolymer, or a derivative thereof, such as a sodium, ammonium, or amine salt. In particular, the acrylic resin is preferably a derivative of polyacrylic acid, such as an ammonium, sodium, or amine salt of polyacrylic acid. As used herein, the term "polyacrylic acid" refers to a polymer of acrylic acid. Alternatively, the acrylic resin is preferably a copolymer of acrylic acid with a dicarboxylic acid or a dicarboxylic anhydride, or preferably an ammonium, sodium, or amine salt of the copolymer of acrylic acid with a dicarboxylic acid or a dicarboxylic anhydride. A single acrylic resin may be used alone, or a mixture of two or more of acrylic resins may be used.

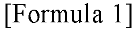

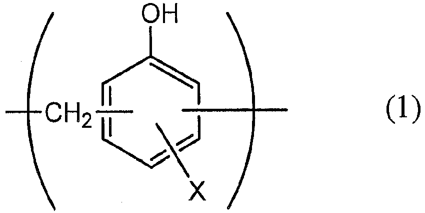

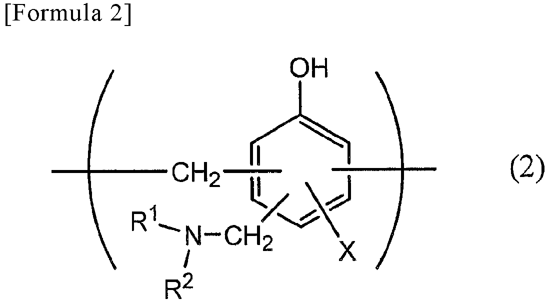

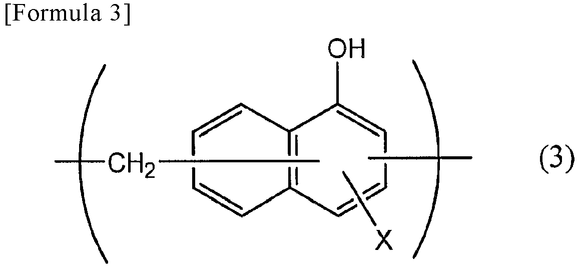

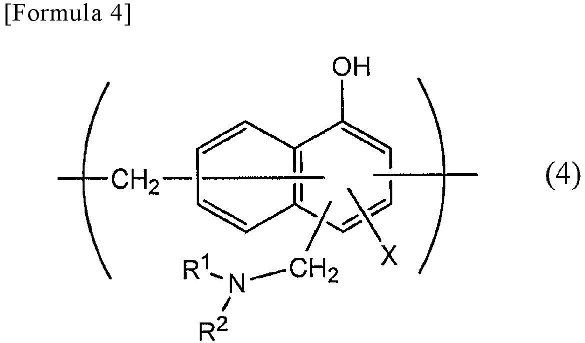

In general formulae (1) to (4), X represents a hydrogen atom, a hydroxy group, an alkyl group, a hydroxyalkyl group, an allyl group, or a benzyl group. R¹ and R² are the same or different, and each represent a hydroxy group, an alkyl group, or a hydroxyalkyl group. In general formulae (1) to (4), examples of alkyl groups represented by X, R¹, and R² include linear or branched alkyl groups with 1 to 4 carbon atoms, such as methyl, ethyl, n-propyl, isopropyl, n-butyl, isobutyl, and tert-butyl groups. Examples of hydroxyalkyl groups represented by X, R¹, and R² include linear or branched alkyl groups with 1 to 4 carbon atoms, which are substituted with one hydroxy group, such as a hydroxymethyl, 1-hydroxyethyl, 2-hydroxyethyl, 1-hydroxypropyl, 2-hydroxypropyl, 3-hydroxypropyl, 1-hydroxybutyl, 2-hydroxybutyl, 3-hydroxybutyl, or 4-hydroxybutyl group. In general formulae (1) to (4), the alkyl groups and the hydroxyalkyl groups represented by X, R¹, and R² may be the same or different. In general formulae (1) to (4), X is preferably a hydrogen atom, a hydroxy group, or a hydroxyalkyl group. The number average molecular weight of the aminated phenol polymer having any of the repeating units represented by general formulae (1) to (4) is, for example, about 500 to 1,000,000, preferably about 1,000 to 20,000. The aminated phenol polymer is produced, for example, by polycondensing a phenol compound or a naphthol compound with formaldehyde to produce a polymer composed of the repeating unit represented by general formula (1) or (3) above, and then introducing a functional group (-CH₂NR¹R²) into the polymer obtained above using formaldehyde and an amine (R¹R²NH). A single aminated phenol polymer may be used alone, or a mixture of two or more aminated phenol polymers may be used.

Other examples of the corrosion-resistant film include a thin film formed by coating-type anti-corrosion treatment in which a coating preparation containing at least one selected from the group consisting of a rare earth element oxide sol, an anionic polymer, and a cationic polymer is applied. The coating preparation may also contain phosphoric acid or a phosphate and a crosslinking agent that crosslinks the polymer. In the rare earth element oxide sol, fine particles of a rare earth element oxide (for example, particles with an average particle diameter of 100 nm or less) are dispersed in a liquid dispersion medium. Examples of the rare earth element oxide include cerium oxide, yttrium oxide, neodymium oxide, and lanthanum oxide, with cerium oxide being preferred in view of further improving the adhesion. A single rare earth element oxide or a combination of two or more rare earth element oxides may be contained in the corrosion-resistant film. The liquid dispersion medium of the rare earth element oxide sol may be any of various solvents, such as, for example, water, alcohol solvents, hydrocarbon solvents, ketone solvents, ester solvents, and ether solvents, with water being preferred. Examples of the cationic polymer include polyethyleneimine, ion polymer complexes composed of polymers containing polyethyleneimine and carboxylic acids, primary amine-grafted acrylic resins obtained by grafting primary amines to an acrylic backbone, polyallylamine or derivatives thereof, and aminated phenols. The anionic polymer is preferably a copolymer that contains, as a main component, poly(meth)acrylic acid or a salt thereof, or (meth)acrylic acid or a salt thereof. The crosslinking agent is preferably at least one selected from the group consisting of compounds with any of an isocyanate group, a glycidyl group, a carboxyl group, and an oxazoline group as a functional group, and silane coupling agents. The phosphoric acid or phosphate is preferably condensed phosphoric acid or a condensed phosphate.

One exemplary corrosion-resistant film is formed by coating the surface of the barrier layer with a dispersion in phosphoric acid of fine particles of a metal oxide, such as aluminum oxide, titanium oxide, cerium oxide, or tin oxide, or barium sulfate, and baking at 150°C or more.

The corrosion-resistant film may optionally have a laminated structure in which at least one of a cationic polymer and an anionic polymer is additionally laminated. Examples of the cationic polymer and the anionic polymer are those as mentioned above.

The composition of the corrosion-resistant film can be analyzed using, for example, time-of-flight secondary ion mass spectrometry.

While the amount of the corrosion-resistant film to be formed on the surface of the barrier layer 3 by the chemical conversion treatment is not specifically limited, in the case of employing, for example, coating-type chromate treatment, it is preferred that the chromic acid compound be contained in an amount of about 0.5 to 50 mg, for example, preferably about 1.0 to 40 mg, calculated as chromium, the phosphorus compound be contained in an amount of about 0.5 to 50 mg, for example, preferably about 1.0 to 40 mg, calculated as phosphorus, and the aminated phenol polymer be contained in an amount of about 1.0 to 200 mg, for example, preferably about 5.0 to 150 mg, per m² of the surface of the barrier layer 3.

While the thickness of the corrosion-resistant film is not specifically limited, it is preferably about 1 nm to 20 µm, more preferably about 1 to 100 nm, and still more preferably about 1 to 50 nm, in view of the cohesive force of the film, and the adhesion force between the barrier layer and the heat-sealable resin layer. The thickness of the corrosion-resistant film can be measured by observation with a transmission electron microscope, or a combination of observation with a transmission electron microscope and energy dispersive X-ray spectroscopy or electron energy loss spectroscopy. As a result of the analysis of the composition of the corrosion-resistant film using time-of-flight secondary ion mass spectrometry, a peak derived from, for example, secondary ions of Ce, P, and O (for example, at least one of Ce₂PO₄⁺, CePO₄⁻, and the like) or a peak derived from, for example, secondary ions of Cr, P, and O (for example, at least one of CrPO₂⁺, CrPO₄⁻, and the like) is detected.

The chemical conversion treatment is performed by applying the solution containing the compound to be used for forming the corrosion-resistant film to a surface of the barrier layer, using a bar coating method, a roll coating method, a gravure coating method, an immersion method, or the like, followed by heating such that the temperature of the barrier layer is increased to about 70 to 200°C. Before the barrier layer is subjected to the chemical conversion treatment, the barrier layer may be subjected to the degreasing treatment using an alkali immersion method, an electrolytic cleaning method, an acid cleaning method, an electrolytic acid cleaning method, or the like. The degreasing treatment allows the chemical conversion treatment of the surface of the barrier layer to be more efficiently performed. Alternatively, by using an acid degreasing agent in which a fluorine-containing compound is dissolved in an inorganic acid in the degreasing treatment, it is possible to achieve not only the effect of degreasing the metal foil, but also to form a passive metal fluoride. In this case, only the degreasing treatment may be performed.

### [Heat-Sealable Resin Layer 4]

In the power storage device packaging material of the present disclosure, the heat-sealable resin layer 4 corresponds to the innermost layer and is a layer (sealant layer) that is heat-sealed to another heat-sealable resin layer during the assembly of a power storage device to exhibit the function of hermetically sealing the power storage device element. The heat-sealable resin layer 4 comprises a film. The film can function as a sealant film in the heat-sealable resin layer 4.

In the present disclosure, the film is formed of a resin containing three or more structural units and has a melting peak temperature of 170°C or more. As used herein, the term "structural units" of the resin means structural units constituting the resin. For example, when the resin is a copolymer, at least two types of monomer units are the structural units of the resin (two or more types of structural units introduced into the resin by polymerization). For example, in the present disclosure, the resin forming the film preferably contains a polyester structure A, as described below. The polyester structure A is a structure in which an ester bond is formed by dehydrocondensation of a polycarboxylic acid (monomer) with a polyol (monomer), and contains two types of structural units (monomer units), i.e., a structure (monomer unit (also referred to as a repeating unit)) derived from the polycarboxylic acid and a structure (monomer unit (also referred to as a repeating unit)) derived from the polyol. While the upper limit of the types of structural units is not specifically provided for the resin forming the film, it is, for example, about six. The inclusion of three or more structural units in the film can be confirmed using techniques such as NMR and GCMS, for example.

In the present disclosure, the use of the film with a melting peak temperature of 170°C or more as the heat-sealable resin layer 4 can prevent deformation when the power storage device packaging material 10 is subjected to a load such as tension in a high-temperature environment. Furthermore, the inclusion of three or more structural units (typically monomer units) in the film can increase the flexibility of the film and prevent embrittlement of the film in a low-temperature environment. It can be believed that, as a result of the above, the power storage device packaging material of the present disclosure can exhibit a high sealing strength in a wide range of temperature environments from low to high temperatures.

In the present disclosure, the structural units of the resin are typically the monomer units contained in the copolymer. However, the concept of the structural units of the resin includes not only the monomer units forming the main chain of the copolymer, but also a monomer unit forming a side chain (for example, a monomer unit introduced by graft polymerization or the like) and a monomer unit forming a crosslinked structure between the main chains (a unit derived from a crosslinking monomer).

As described above, in a conventional electrolytic solution lithium-ion battery that contains an organic solvent, a film such as a polypropylene film is used as the heat-sealable resin layer of the packaging material and undergoes significant reduction in durability (sealing strength) in a high-temperature environment of 100°C or more. For example, a polypropylene film is commonly formed of a copolymer of propylene and ethylene as structural units and has a melting peak temperature below 170°C.

In view of more satisfactorily achieving the effects of the invention of the present disclosure, preferably, the resin forming the film contains a polyester structure A. The polyester structure A is obtained by polycondensation of an acid component and a polyol component. The acid component is selected from phthalic acid, terephthalic acid, isophthalic acid, naphthalenedicarboxylic acid, cyclohexanedicarboxylic acid, adipic acid, sebacic acid, and the like. The polyol component is selected from ethylene glycol, butanediol, pentanediol, hexanediol, neopentyl glycol, diethylene glycol, polytetramethylene glycol, cyclohexanedimethanol, propanediol, and the like. More preferably, the polyester structure A is a polybutylene terephthalate structure. The polybutylene terephthalate structure is a structure formed by polymerization of terephthalic acid and 1,4-butanediol, and contains two types of structural units, i.e., a structure derived from terephthalic acid and a structure derived from 1,4-butanediol.

Furthermore, in view of more satisfactorily achieving the effects of the invention of the present disclosure, the resin forming the film more preferably contains at least one selected from the group consisting of a polyether structure and a polyester structure B, in addition to the polyester structure A. The polyester structure B is a polyester structure different from the polyester structure A.

The polyether structure can be introduced into the resin by a polycondensation reaction between the polycarboxylic acid of the polyester structure A (for example, terephthalic acid in the case of the polybutylene terephthalate structure) and a compound (monomer) with a polyether structure. Preferably, the polyether structure constitutes a soft segment of the resin in the film. Examples of the compound (monomer) that constitutes the soft segment by the polycondensation reaction with the polycarboxylic acid of the polyester structure A include diols that can express stretchability, such as polytetramethylene ether glycol and neopentyl glycol. Preferably, the polyether structure is a polyether structure derived from at least one selected from the group consisting of polytetramethylene ether glycol and neopentyl glycol. Polytetramethylene ether glycol, neopentyl glycol, or the like forms a structural unit in the polyether structure of the resin. The introduction of the polyether structure into the resin as a soft segment can increase the rubber elasticity of the resin to make the resin unlikely to break, so that a high sealing strength can be satisfactorily exhibited in a wide range of temperature environments from low to high temperatures.

The polyester structure B can be introduced into the resin by using a compound (monomer) that forms a polyester structure by a polycondensation reaction with the polyol such as ethylene glycol, butanediol, pentanediol, hexanediol, neopentyl glycol, diethylene glycol, polytetramethylene glycol, cyclohexanedimethanol, propanediol, or the like used in the polyester structure A. Preferably, the polyester structure B constitutes a soft segment of the resin in the film. Examples of the compound (monomer) that constitutes the soft segment by the polycondensation reaction with the polyol in the polyester structure A include dicarboxylic acids, such as aromatic dicarboxylic acids, for example, phthalic acid, terephthalic acid, isophthalic acid, and naphthalene dicarboxylic acid, and aliphatic dicarboxylic acids, for example, adipic acid, sebacic acid, dodecanedioic acid, and cyclohexanedicarboxylic acid (with aliphatic dicarboxylic acids containing 4 to 20 carbon atoms being preferred). An aromatic dicarboxylic acid, an aliphatic dicarboxylic acid, or the like forms a structural unit in the polyester structure B of the resin. Particularly preferably, the polyester structure B is a polyester structure resulting from polycondensation of the polyol and at least one dicarboxylic acid selected from the group consisting of isophthalic acid, sebacic acid, and dodecanedioic acid. The introduction of the polyester structure B into the resin as a soft segment can increase the rubber elasticity of the resin to make the resin unlikely to break, so that a high sealing strength can be satisfactorily exhibited in a wide range of temperature environments from low to high temperatures.

In view of more satisfactorily achieving the effects of the invention of the present disclosure, the resin forming the film particularly preferably contains a polyether structure, in addition to the polybutylene terephthalate structure, wherein the polyether structure has a polycondensation structure of at least one of polytetramethylene ether glycol and neopentyl glycol with the terephthalic acid of the polybutylene terephthalate structure. Particularly preferably, the resin forming the film also contains the polyester structure B, in addition to the polybutylene terephthalate structure, wherein the polyester structure B has a polycondensation structure of at least one selected from the group consisting of isophthalic acid, dodecanedioic acid, and sebacic acid with the 1,4-butanediol of the polybutylene terephthalate structure.

Furthermore, in view of more satisfactorily achieving the effects of the invention of the present disclosure, the resin forming the film preferably contains the polyester structure A as a main component, and more preferably contains the polybutylene terephthalate structure as a main component. As used herein, the term "main component" means that a proportion of the main component is 50 mol% or more, preferably 60 mol% or more, more preferably 70 mol% or more, and still more preferably 80 mol% more, based on 100 mol% of all components constituting the resin. In the resin forming the sealant film, a proportion of at least one of the polyether structure and the dicarboxylic acid structure is preferably about 2 to 30 mol%, more preferably about 3 to 25 mol%, and still more preferably about 3 to 20 mol%, based on 100 mol% of all components (all monomer units) constituting the resin.

In the present disclosure, the film has a melting peak temperature of 170°C or more. In view of more satisfactorily achieving the effects of the invention of the present disclosure, the melting peak temperature is preferably 190°C or more, and more preferably 200°C or more, while it is preferably 350°C or less, more preferably 300°C or less, still more preferably 270°C or less, and even more preferably 217°C or less. Preferred ranges include from about 170 to 350°C, from about 170 to 300°C, from about 170 to 270°C, from about 170 to 217°C, from about 190 to 350°C, from about 190 to 300°C, from about 190 to 270°C, from about 190 to 217°C, from about 200 to 350°C, from about 200 to 300°C, from about 200 to 270°C, and from about 200 to 217°C. The method of measuring the melting peak temperature is as set forth below.

### <Measurement of Melting Peak Temperature>

For the resin forming the film, melting peak temperature is measured according to JIS K 7121: 2012 (Testing Methods for Transition Temperatures of Plastics) (Supplement 1 to JIS K 7121: 1987)). The measurement is performed with a differential scanning calorimeter (DSC, the differential scanning calorimeter Q200 from TA Instruments Inc.). The measurement sample is held at -50°C for 15 minutes and then heated from -50°C to 300°C at a heating rate of 10°C/min to measure a first melting peak temperature P (°C), and thereafter held at 300°C for 2 minutes. Next, the sample is cooled from 300°C to -50°C at a cooling rate of 10°C/min and held for 15 minutes. The sample is further heated from -50°C to 300°C at a heating rate of 10°C/min to measure a second melting peak temperature Q (°C). The flow rate of nitrogen gas is 50 ml/min. Using the above-described procedure, the first measured melting peak temperature P (°C) and the second measured melting peak temperature Q (°C) are obtained, and the first measured melting peak temperature is determined as the melting peak temperature.

Furthermore, in view of more satisfactorily achieving the effects of the invention of the present disclosure, the film preferably has a glass transition temperature (Tg) of 67°C or less, more preferably 60°C or less, still more preferably 50°C or less, while preferably having a glass transition temperature (Tg) of 0°C or more, more preferably 10°C or more. Preferred ranges include from about 0 to 67°C, from about 0 to 60°C, from about 0 to 50°C, from about 10 to 67°C, from about 10 to 60°C, and from about 10 to 50°C. The glass transition temperature (Tg) is the value as measured by dynamic viscoelasticity measurement (DMA). Specifically, the glass transition temperature of the resin forming the film is measured by dynamic viscoelasticity measurement (DMA). The measurement is performed with a commercial device. The distance between the chucks is set to 10 mm, and a piece of the film cut to a width of 5 mm and a length of 20 mm is mounted. The measurement conditions are as follows: heating from -30°C to 250°C at a heating rate of 5°C/min; frequency: 10 Hz; static load: 70 g; and strain: 5 µm. The peak temperature of the loss sine (tan δ) obtained by dividing the loss modulus by the storage modulus as measured under these conditions is determined as the glass transition temperature. When the heat-sealable resin layer is formed of a plurality of layers containing different resins, the heat-sealable resin layer may be separated from the barrier layer, and the glass transition temperature (Tg) of the heat-sealable resin layer may be measured to obtain the peak value of tan δ for each resin. For each of the layers included in the heat-sealable resin layer, separately, the type of resin contained in each layer identified from an infrared absorption spectrum or the like can be linked to its glass transition temperature (Tg).

The glass transition temperature (Tg) of the film can be lowered, for example, by increasing the proportion of copolymerization components (particularly portions other than the polyester structure A (soft segments such as the polyester structure B and the polyether structure)) of the resin constituting the film.

In view of more satisfactorily achieving the effects of the invention of the present disclosure, the film preferably has a tensile rupture elongation in a -30°C environment of 5% or more, more preferably 150% or more, still more preferably 200% or more, while preferably having a tensile rupture elongation in a -30°C environment of 2000% or less, more preferably 1600% or less, still more preferably 500% or less. Preferred ranges include from about 5 to 2000%, from about 5 to 1600%, from about 5 to 500%, from about 150 to 2000%, from about 150 to 1600%, from about 150 to 500%, from about 200 to 2000%, from about 200 to 1600%, and from about 200 to 500%. The method of measuring the tensile rupture elongation is as set forth below.

In view of more satisfactorily achieving the effects of the invention of the present disclosure, the film preferably has a tensile rupture elongation in a 23 °C environment of 5% or more, more preferably 400% or more, still more preferably 500% or more, while preferably having a tensile rupture elongation in a 23 °C environment of 2000% or less, more preferably 1600% or less, still more preferably 850% or less. Preferred ranges include from about 5 to 2000%, from about 5 to 1600%, from about 5 to 850%, from about 400 to 2000%, from about 400 to 1600%, from about 400 to 850%, from about 500 to 2000%, from about 500 to 1600%, and from about 500 to 850%. The method of measuring the tensile rupture elongation is as set forth below.

In view of more satisfactorily achieving the effects of the invention of the present disclosure, the film preferably has a tensile rupture elongation in a 120°C environment of 650% or more, more preferably 700% or more, still more preferably 750% or more, even more preferably 800% or more, still more preferably 850% or more, while preferably having a tensile rupture elongation in a 120°C environment of 2000% or less, more preferably 1600% or less. Preferred ranges include from about 650 to 2000%, from about 650 to 1600%, from about 700 to 2000%, from about 700 to 1600%, from about 750 to 2000%, from about 750 to 1600%, from about 800 to 2000%, from about 800 to 1600%, from about 850 to 2000%, and from about 850 to 1600%. The method of measuring the tensile rupture elongation is as set forth below.

Furthermore, in view of more satisfactorily achieving the effects of the invention of the present disclosure, the film preferably has a tensile rupture elongation in a 150°C environment of 750% or more, more preferably 850% or more, still more preferably 900% or more, while preferably having a tensile rupture elongation in a 150°C environment of 2000% or less, more preferably 1700% or less, still more preferably 1600% or less. Preferred ranges include from about 750 to 2000%, from about 750 to 1700%, from about 750 to 1600%, from about 850 to 2000%, from about 850 to 1700%, from about 850 to 1600%, from about 900 to 2000%, from about 900 to 1700%, and from about 900 to 1600%. The method of measuring the tensile rupture elongation is as set forth below.

### <Measurement of Tensile Rupture Elongation (at -30°C, 23°C, 120°C, or 150°C) of the Film>

Tensile rupture elongation is measured with a tensile testing machine, using the method according to JIS K7127: 1999. The test sample width is the dumbbell shape according to JIS-K 6251-7, the gauge length is 15 mm, the tensile speed is 50 mm/min, and the test environments are each -30°C, 23°C, 120°C, or 150°C. Three measurements are made in each test environment, and the average value of the three measured values is determined as the tensile rupture elongation.

The tensile rupture elongation of the film can be increased, for example, by increasing the proportion of copolymerization components (particularly portions other than the polyester structure A (soft segments such as the polyester structure B and the polyether structure)) of the resin constituting the film.

In view of more satisfactorily achieving the effects of the invention of the present disclosure, an indentation modulus as measured from the heat-sealable resin layer side of the laminate constituting the packaging material (indentation modulus of the film) is preferably about 0.3 GPa or more, more preferably about 0.4 GPa or more, and still more preferably about 0.5 GPa or more. From the same viewpoint, the indentation modulus of the film is preferably about 5 GPa or less, more preferably about 4 GPa or less, still more preferably about 3 GPa or less, even more preferably about 2 GPa or less, and still more preferably about 1.5 GPa or less. Preferred ranges of the indentation modulus of the film include from about 0.3 to 5 GPa, from about 0.3 to 4 GPa, from about 0.3 to 3 GPa, from about 0.3 to 2 GPa, from about 0.3 to 1.5 GPa, from about 0.4 to 5 GPa, from about 0.4 to 4 GPa, from about 0.4 to 3 GPa, from about 0.4 to 2 GPa, from about 0.4 to 1.5 GPa, from about 0.5 to 5 GPa, from about 0.5 to 4 GPa, from about 0.5 to 3 GPa, from about 0.5 to 2 GPa, and from about 0.5 to 1.5 GPa. The method of measuring the indentation modulus is as set forth below.

### [Measurement of Indentation Modulus]

Indentation modulus is measured according to ISO 14577:2015, using the following method for measuring the indentation modulus: For the heat-sealable resin layer-side surface of the laminate, the indentation modulus is measured using an ultra-low loaded hardness tester equipped with a Vickers indenter (square pyramidal diamond indenter having an angle between opposite faces of 136°), in an environment at about 23°C and about 60% RH. The measurement is performed with an indentation speed of 0.1 µm/sec, an indentation depth of 2 µm, a holding time of 5 seconds, and a drawing speed of 0.1 µm/sec. The ultra-low loaded hardness tester is preferably PICODENTOR HM500 (available from Fischer Instruments K.K.). At least five samples are measured, and the average of the measured values is determined as the value of indentation modulus for the conditions. An adsorption plate or an instant adhesive is preferably used to fix the sample. When measuring the indentation modulus for the film alone, the measurement is performed at a central portion of a main surface of the film.

The heat-sealable resin layer 4 may be composed of a single layer, as shown in FIG. 5, for example, or may be composed of two or more layers, as shown in FIGS. 6 and 7, for example. FIG. 6 shows the heat-sealable resin layer 4 formed of a laminate in which a first layer 41 on the barrier layer 3 side and a second layer 42 on the innermost layer side are laminated. FIG. 7 shows the heat-sealable resin layer 4 formed of a laminate in which a third layer 43 on the barrier layer side, the first layer 41 positioned in the middle, and the second layer 42 on the innermost layer side are laminated in this order.

When the heat-sealable resin layer 4 is composed of two or more layers, at least one of the two or more layers is preferably the film of the present disclosure (that is, the film is formed of a resin containing three or more structural units and has a melting peak temperature of 170°C or more). When the heat-sealable resin layer 4 is composed of two or more layers, the surface of the heat-sealable resin layer 4 opposite to the barrier layer 3 side (i.e., the innermost layer surface of the power storage device packaging material 10) is preferably formed of the film of the present disclosure. In FIGS. 6 and 7, at least the second layer 42 is preferably the film of the present disclosure. When the heat-sealable resin layer 4 is composed of two or more layers, it is also preferred that all of the layers be formed of the film of the present disclosure. When the heat-sealable resin layer is formed of a plurality of layers containing different resins, the layers may be separated from one another to measure the melting peak temperature of each layer.

The heat-sealable resin layer 4 may optionally contain a lubricant and the like. The inclusion of a lubricant in the heat-sealable resin layer 4 can improve the moldability of the power storage device packaging material. The lubricant is not specifically limited and may be a known lubricant. A single lubricant may be used alone, or a combination of two or more lubricants may be used, with a combination of two or more lubricants being preferred.

While the lubricant is not specifically limited, it is preferably an amide-based lubricant. Specific examples of the lubricant are those exemplified for the base material layer 1. A single lubricant may be used alone, or a combination of two or more lubricants may be used.

In the present disclosure, preferably, a lubricant is present on at least one of the surface and the inside of the heat-sealable resin layer 4, in view of improving the moldability of the power storage device packaging material. While the lubricant is not specifically limited, it is preferably an amide-based lubricant. Specific examples of amide-based lubricants include saturated fatty acid amides, unsaturated fatty acid amides, substituted amides, methylol amides, saturated fatty acid bis-amides, unsaturated fatty acid bis-amides, fatty acid ester amides, and aromatic bis-amides. Specific examples of saturated fatty acid amides include lauramide, palmitamide, stearamide, behenamide, and hydroxystearamide. Specific examples of unsaturated fatty acid amides include oleamide and erucamide. Specific examples of substituted amides include N-oleyl palmitamide, N-stearyl stearamide, N-stearyl oleamide, N-oleyl stearamide, and N-stearyl erucamide. Specific examples of methylol amides include methylol stearamide. Specific examples of saturated fatty acid bis-amides include methylene-bis-stearamide, ethylene-bis-capramide, ethylene-bis-lauramide, ethylene-bis-stearamide, ethylene-bis-hydroxystearamide, ethylene-bis-behenamide, hexamethylene-bis-stearamide, hexamethylene-bis-behenamide, hexamethylene hydroxystearamide, N,N'-distearyl adipamide, and N,N'-distearyl sebacamide. Specific examples of unsaturated fatty acid bis-amides include ethylene-bis-oleamide, ethylene-bis-erucamide, hexamethylene-bis-oleamide, N,N'-dioleyl adipamide, and N,N'-dioleyl sebacamide. Specific examples of fatty acid ester amides include stearamide ethyl stearate. Specific examples of aromatic bis-amides include m-xylylene-bis-stearamide, m-xylylene-bis-hydroxystearamide, and N,N'-distearyl isophthalamide. A single lubricant may be used alone, or a combination of two or more lubricants may be used, with a combination of two or more lubricants being preferred.

When a lubricant is present on the surface of the heat-sealable resin layer 4, the amount of the lubricant present is not specifically limited; however, in view of improving the moldability of the power storage device packaging material, it is preferably about 1 mg/m² or more, more preferably about 3 mg/m² or more, still more preferably about 5 mg/m² or more, even more preferably about 10 mg/m² or more, and still more preferably about 15 mg/m² or more, while it is preferably about 50 mg/m² or less, and more preferably about 40 mg/m² or less. Preferred ranges include from about 1 to 50 mg/m², from about 1 to 40 mg/m², from about 3 to 50 mg/m², from about 3 to 40 mg/m², from about 5 to 50 mg/m², from about 5 to 40 mg/m², from about 10 to 50 mg/m², from about 10 to 40 mg/m², from about 15 to 50 mg/m², and from about 15 to 40 mg/m².

When a lubricant is present inside the heat-sealable resin layer 4, the amount of the lubricant present is not specifically limited; however, in view of improving the moldability of the power storage device packaging material, it is preferably about 100 ppm or more, more preferably about 300 ppm or more, and still more preferably about 500 ppm or more, while it is preferably about 3000 ppm or less, and more preferably about 2000 ppm or less. Preferred ranges include from about 100 to 3000 ppm, from about 100 to 2000 ppm, from about 300 to 3000 ppm, from about 300 to 2000 ppm, from about 500 to 3000 ppm, and from about 500 to 2000 ppm. When two or more lubricants are present inside the heat-sealable resin layer 4, the amount of the lubricant as described above is the total amount of the lubricants. Furthermore, when two or more lubricants are present inside the heat-sealable resin layer 4, the amount of a first lubricant present is not specifically limited; however, in view of improving the moldability of the power storage device packaging material, it is preferably about 100 ppm or more, more preferably about 300 ppm or more, and still more preferably about 500 ppm or more, while it is preferably about 3000 ppm or less, and more preferably about 2000 ppm or less. Preferred ranges include from about 100 to 3000 ppm, from about 100 to 2000 ppm, from about 300 to 3000 ppm, from about 300 to 2000 ppm, from about 500 to 3000 ppm, and from about 500 to 2000 ppm. The amount of a second lubricant present is not specifically limited; however, in view of improving the moldability of the power storage device packaging material, it is preferably about 50 ppm or more, more preferably about 100 ppm or more, and still more preferably about 200 ppm or more, while it is preferably about 1500 ppm or less, and more preferably about 1000 ppm or less. Preferred ranges include from about 50 to 1500 ppm, from about 50 to 1000 ppm, from about 100 to 1500 ppm, from about 100 to 1000 ppm, from about 200 to 1500 ppm, and from about 200 to 1000 ppm.

The lubricant present on the surface of the heat-sealable resin layer 4 may be exuded from the lubricant contained in the resin constituting the heat-sealable resin layer 4, or may be applied to the surface of the heat-sealable resin layer 4.

The thickness of the heat-sealable resin layer 4 is not specifically limited as long as the heat-sealable resin layer is heat-sealed with another heat-sealable resin layer to exhibit the function of hermetically sealing the power storage device element; for example, it is about 100 µm or less, preferably about 85 µm or less, and more preferably about 15 to 85 µm. For example, when the thickness of the below-described adhesive layer 5 is 10 µm or more, the thickness of the heat-sealable resin layer 4 is preferably about 85 µm or less, and more preferably about 15 to 45 µm. For example, when the thickness of the below-described adhesive layer 5 is less than 10 µm or when the adhesive layer 5 is not provided, the thickness of the heat-sealable resin layer 4 is preferably about 20 µm or more, and more preferably about 35 to 85 µm.

### (Method for Producing the Film)

The film included in the heat-sealable resin layer 4 may be produced by any method that can produce the film of the present disclosure, and a known or conventional film-forming method or lamination method can be employed. The film can be produced using a known film-forming method and/or a known lamination method, for example, an extrusion or co-extrusion method, a casting method, a T-die method, a cutting method, and an inflation method. When two or more layers of the films are included in the heat-sealable resin layer 4, examples of methods include laminating previously prepared films constituting the layers via the adhesive agent layer; laminating a molten resin composition onto a previously prepared layer by an extrusion or co-extrusion method; producing and laminating a plurality of layers simultaneously by melt pressing; and coating another layer with one or more resins and drying.

The heat-sealable resin layer 4 including the film may be laminated by laminating the layer included in the heat-sealable resin layer 4 using extrusion coating by extrusion or coextrusion, or by laminating the layer included in the heat-sealable resin layer 4 via the adhesive layer after the film is formed using an inflation method or a casting method. When using extrusion coating, the layer may be laminated optionally via the adhesive layer. Alternatively, a pre-formed film for use as a water absorption layer (or a sulfur-based gas absorption layer) may be laminated and bonded via the adhesive layer, which is laminated using extrusion coating, dry lamination, nonsolvent lamination, or the like. The resulting laminate may be optionally subjected to aging treatment.

When the film or the like is laminated using, for example, extrusion coating, first, the resin forming the film is melted by heating, and expanded and extended in the width direction required in a T-die and (co-)extruded into a curtain-like shape. The molten resin then flows down onto a surface to be laminated and then held between a rubber roll and a cooled metal roll. This allows the layer to be formed and simultaneously, laminated and bonded onto the surface to be laminated. In the case of lamination by extrusion coating, each of the resin components preferably has a melt mass-flow rate (MFR) of 0.2 to 50 g/10 min, more preferably 0.5 to 30 g/10 min. If the MFR falls above or below the above-defined range, processability tends to be poor. As used herein, the MFR is the value as measured using the method according to JIS K7210.

When using the inflation method, the resin component preferably has a melt mass-flow rate (MFR) of 0.2 to 10 g/10 min, more preferably 0.2 to 9.5 g/10 min. If the MFR falls above or below the above-defined range, processability tends to be poor.

When the heat-sealable resin layer 4 is composed of two or more layers, optionally, the surface of each layer may be previously subjected to desired surface treatment to improve the adhesiveness between the layers constituting the heat-sealable resin layer 4 including the film. For example, the surface may be optionally subjected to a pre-treatment such as corona discharge treatment, ozone treatment, low-temperature plasma treatment using oxygen gas or nitrogen gas, glow discharge treatment, or oxidation treatment using a chemical, so as to form a corona treatment layer, an ozone treatment layer, a plasma treatment layer, an oxidation treatment layer, or the like. Alternatively, any of various coating agent layers, such as a primer coating agent layer, an undercoating agent layer, an anchor coating agent layer, an adhesive agent layer, or a vapor-deposited anchor coating agent layer can be optionally formed on the surface to form a surface treatment layer. The various coating agent layers may be formed using a resin composition containing, for example, a polyester resin, a polyamide resin, a polyurethane resin, an epoxy resin, a phenolic resin, a (meth)acrylic resin, a polyvinyl acetate resin, a polyolefin resin such as polyethylene or polypropylene or a copolymer or modified resin thereof, a cellulose resin, or the like, as a main component of the vehicle.

The layer included in the heat-sealable resin layer 4 can also be optionally uniaxially or biaxially stretched by a conventionally known method, using the tenter method, the tubular method, or the like.

### [Adhesive Layer 5]

In the power storage device packaging material of the present disclosure, the adhesive layer 5 is a layer that is optionally provided between the heat-sealable resin layer 4 and the barrier layer 3 (or the corrosion-resistant film), in order to strongly bond these layers.

The adhesive layer 5 is formed of a resin capable of bonding the barrier layer 3 and the heat-sealable resin layer 4. Examples of the resin to be used for forming the adhesive layer 5 may include the same adhesives as those exemplified for the adhesive agent layer 2.

In view of further improving the adhesion between the barrier layer 3 and the adhesive layer 5, the adhesive layer 5 is preferably a cured product of a resin composition containing a curing agent having at least one selected from the group consisting of an oxygen atom, a heterocyclic ring, a C=N bond, and a C-O-C bond. Examples of the curing agent having a heterocyclic ring include a curing agent having an oxazoline group and a curing agent having an epoxy group. Examples of the curing agent having a C=N bond include a curing agent having an oxazoline group and a curing agent having an isocyanate group. Examples of the curing agent having a C-O-C bond include a curing agent having an oxazoline group and a curing agent having an epoxy group. Whether the adhesive layer 5 is a cured product of a resin composition containing these curing agents can be confirmed using a method such as gas chromatography-mass spectrometry (GCMS), infrared spectroscopy (IR), time-of-flight secondary ion mass spectrometry (TOF-SIMS), or X-ray photoelectron spectroscopy (XPS).

While the compound having an isocyanate group is not specifically limited, it is preferably a polyfunctional isocyanate compound, in view of effectively improving the adhesion between the barrier layer 3 and the adhesive layer 5. The polyfunctional isocyanate compound is not specifically limited as long as it is a compound having two or more isocyanate groups. Specific examples of polyfunctional isocyanate-based curing agents include pentane diisocyanate (PDI), isophorone diisocyanate (IPDI), hexamethylene diisocyanate (HDI), tolylene diisocyanate (TDI), and diphenylmethane diisocyanate (MDI), as well as polymer or isocyanurate forms thereof, mixtures thereof, or copolymers thereof with other polymers. Examples also include adducts, biurets, and isocyanurates.

The content of the compound having an isocyanate group in the adhesive layer 5 is preferably in the range of 0.1 to 50% by mass, and more preferably in the range of 0.5 to 40% by mass, in the resin composition constituting the adhesive layer 5. This can effectively improve the adhesion between the barrier layer 3 and the adhesive layer 5.

The compound having an oxazoline group is not specifically limited as long as it is a compound having an oxazoline backbone. Specific examples of the compound having an oxazoline group include those having a polystyrene main chain and those having an acrylic main chain. Examples of commercial products include the Epocros series from Nippon Shokubai Co., Ltd.

The content of the compound having an oxazoline group in the adhesive layer 5 is preferably in the range of 0.1 to 50% by mass, and more preferably in the range of 0.5 to 40% by mass, in the resin composition constituting the adhesive layer 5. This can effectively improve the adhesion between the barrier layer 3 and the adhesive layer 5.

Examples of the compound having an epoxy group include an epoxy resin. The epoxy resin is not specifically limited as long as it is a resin capable of forming a crosslinked structure with epoxy groups present in the molecule, and may be any of known epoxy resins. The weight average molecular weight of the epoxy resin is preferably about 50 to 2000, more preferably about 100 to 1000, and still more preferably about 200 to 800. As used herein, the weight average molecular weight of the epoxy resin is the value as measured by gel permeation chromatography (GPC), measured under conditions using polystyrene as standard samples.

Specific examples of the epoxy resin include glycidyl ether derivative of trimethylolpropane, bisphenol A diglycidyl ether, modified bisphenol A diglycidyl ether, bisphenol F-type glycidyl ether, novolac glycidyl ether, glycerol polyglycidyl ether, and polyglycerol polyglycidyl ether. These epoxy resins may be used alone or in combination.

The content of the epoxy resin in the adhesive layer 5 is preferably in the range of 0.1 to 50% by mass, and more preferably in the range of 0.5 to 40% by mass, in the resin composition constituting the adhesive layer 5. This can effectively improve the adhesion between the barrier layer 3 and the adhesive layer 5.

The polyurethane is not specifically limited and may be any of known polyurethanes. The adhesive layer 5 may be, for example, a cured product of a two-component curable polyurethane.

The content of the polyurethane in the adhesive layer 5 is preferably in the range of 0.1 to 50% by mass, and more preferably in the range of 0.5 to 40% by mass, in the resin composition constituting the adhesive layer 5. This can effectively improve the adhesion between the barrier layer 3 and the adhesive layer 5, in an atmosphere containing a component that induces corrosion of the barrier layer, such as an electrolytic solution.

When the adhesive layer 5 is a cured product of a resin composition containing the above-mentioned acid-modified polyolefin and at least one selected from the group consisting of a compound having an isocyanate group, a compound having an oxazoline group, and an epoxy resin, the acid-modified polyolefin functions as a base resin, and each of the compound having an isocyanate group, the compound having an oxazoline group, and the compound having an epoxy group functions as a curing agent.

The adhesive layer 5 may contain a modifier having a carbodiimide group.

Alternatively, the adhesive layer 5 is preferably formed of a cured product of a resin composition containing at least one of a polyester and a polycarbonate, and at least one of an alicyclic isocyanate compound and an aromatic isocyanate compound.

The polyester is preferably a polyester polyol. The polyester polyol is not specifically limited as long as it has an ester bond in the polymer main chain and has a plurality of hydroxy groups at the ends or a side chain. The polycarbonate is preferably a polycarbonate polyol. The polyester polyol is not specifically limited as long as it has a carbonate bond in the polymer main chain and has a plurality of hydroxy groups at the ends or a side chain. The resin composition forming the adhesive layer 5 may contain a single polyester or two or more polyesters and likewise, a single polycarbonate or two or more polycarbonates.

The alicyclic isocyanate compound is not specifically limited as long as it is a compound having an alicyclic structure and isocyanate groups. The alicyclic isocyanate compound preferably has two or more isocyanate groups. Specific examples of the alicyclic isocyanate compound include isophorone diisocyanate (IPDI) and the like, as well as polymer or isocyanurate forms thereof, mixtures thereof, or copolymers thereof with other polymers. Examples also include adducts, biurets, and isocyanurates. The resin composition forming the adhesive layer 5 may contain a single alicyclic isocyanate compound or two or more alicyclic isocyanate compounds.

The aromatic isocyanate compound is not specifically limited as long as it is a compound having an aromatic ring and isocyanate groups. The aromatic isocyanate compound preferably has two or more isocyanate groups. Specific examples of the aromatic isocyanate compound include tolylene diisocyanate (TDI) and diphenylmethane diisocyanate (MDI), as well as polymer or isocyanurate forms thereof, mixtures thereof, or copolymers thereof with other polymers. Examples also include adducts, biurets, and isocyanurates. The resin composition forming the adhesive layer 5 may contain a single aromatic isocyanate compound or two or more aromatic isocyanate compounds.

When the resin composition forming the adhesive layer 5 contains at least one of an alicyclic isocyanate compound and an aromatic isocyanate compound, the resin composition may, for example, contain an alicyclic isocyanate compound and no aromatic isocyanate compound; or may, for example, contain an aromatic isocyanate compound and no alicyclic isocyanate compound; or may, for example, contain both an alicyclic isocyanate compound and an aromatic isocyanate compound.

The content of each of the alicyclic isocyanate compound and the aromatic isocyanate compound in the adhesive layer 5 is preferably in the range of 0.1 to 50% by mass, and more preferably in the range of 0.5 to 40% by mass, in the resin composition constituting the adhesive layer 5. When the adhesive layer 5 contains both an alicyclic isocyanate compound and an aromatic isocyanate compound, the total content of these compounds is preferably in the range of 0.1 to 50% by mass, and more preferably in the range of 0.5 to 40% by mass, in the resin composition constituting the adhesive layer 5.

The thickness of the adhesive layer 5 is preferably about 50 µm or less, about 40 µm or less, about 30 µm or less, about 20 µm or less, or about 5 µm or less. On the other hand, the thickness of the adhesive layer 5 is preferably about 0.1 µm or more, or about 0.5 µm or more. Preferred ranges of the thickness of the adhesive layer 5 include from about 0.1 to 50 µm, from about 0.1 to 40 µm, from about 0.1 to 30 µm, from about 0.1 to 20 µm, from about 0.1 to 5 µm, from about 0.5 to 50 µm, from about 0.5 to 40 µm, from about 0.5 to 30 µm, from about 0.5 to 20 µm, and from about 0.5 to 5 µm. More specifically, when an adhesive as exemplified for the adhesive agent layer 2 is used, the thickness of the adhesive layer 5 is preferably about 1 to 10 µm, and more preferably about 1 to 5 µm. When the adhesive layer 5 is a cured product of a resin composition containing an adhesive as exemplified for the adhesive agent layer 2, the adhesive layer 5 can be formed by, for example, applying the resin composition, and curing the resin composition by heating or the like.

### [Surface Coating Layer 6]

The power storage device packaging material of the present disclosure may optionally include a surface coating layer 6 on the base material layer 1 (opposite to the barrier layer 3 on the base material layer 1) for at least one of the purposes of improving the designability, electrolytic solution resistance, scratch resistance, and moldability, for example. The surface coating layer 6 is a layer positioned as the outermost layer of the power storage device packaging material when a power storage device is assembled using the power storage device packaging material.

Examples of the resin forming the surface coating layer 6 include resins such as polyvinylidene chloride, polyesters, polyamides, epoxy resins, acrylic resins, fluororesins, polyurethanes, silicone resins, and phenol resins, and modified resins thereof. The resin forming the surface coating layer 6 may also be a copolymer of these resins or a modified copolymer thereof. The resin forming the surface coating layer 6 may also be a mixture of these resins. The resin is preferably a curable resin. That is, the surface coating layer 6 is preferably formed of a cured product of a resin composition containing a curable resin.

When the resin forming the surface coating layer 6 is a curable resin, the resin may be either a one-component curable resin or a two-component curable resin, preferably a two-component curable resin. The two-component curable resin may be, for example, a two-component curable polyurethane, a two-component curable polyester, or a two-component curable epoxy resin. Among the above, a two-component curable polyurethane is preferred.

The two-component curable polyurethane may be, for example, a polyurethane that contains a first agent containing a polyol compound and a second agent containing an isocyanate compound. The two-component curable polyurethane is preferably a two-component curable polyurethane that contains a polyol such as a polyester polyol, a polyether polyol, or an acrylic polyol as the first agent, and an aromatic or aliphatic polyisocyanate as the second agent. The polyurethane may be, for example, a polyurethane that contains a polyurethane compound obtained beforehand by reacting a polyol compound and an isocyanate compound, and an isocyanate compound. The polyurethane may be, for example, a polyurethane that contains a polyurethane compound obtained beforehand by reacting a polyol compound and an isocyanate compound, and a polyol compound. The polyurethane may be, for example, a polyurethane produced by curing a polyurethane compound obtained beforehand by reacting a polyol compound and an isocyanate compound, by reacting with moisture such as moisture in the air. The polyol compound is preferably a polyester polyol having a hydroxy group at a side chain, in addition to the hydroxy groups at the ends of the repeating unit. Examples of the second agent include aliphatic, alicyclic, aromatic, and aromatic and aliphatic isocyanate compounds. Examples of isocyanate compounds include hexamethylene diisocyanate (HDI), xylylene diisocyanate (XDI), isophorone diisocyanate (IPDI), hydrogenated XDI (H6XDI), hydrogenated MDI (H12MDI), tolylene diisocyanate (TDI), diphenylmethane diisocyanate (MDI), and naphthalene diisocyanate (NDI). Examples also include modified polyfunctional isocyanates obtained from one, or two or more of these diisocyanates. A multimer (for example, a trimer) may also be used as a polyisocyanate compound. Examples of such multimers include adducts, biurets, and isocyanurates. An aliphatic isocyanate compound refers to an isocyanate having an aliphatic group and no aromatic ring, an alicyclic isocyanate compound refers to an isocyanate having an alicyclic hydrocarbon group, and an aromatic isocyanate compound refers to an isocyanate having an aromatic ring. When the surface coating layer 6 is formed of a polyurethane, the power storage device packaging material is provided with excellent electrolytic solution resistance.

At least one of the surface and the inside of the surface coating layer 6 may optionally contain additives, such as the above-mentioned lubricants, anti-blocking agents, matting agents, flame retardants, antioxidants, tackifiers, and anti-static agents, according to the functionality and the like to be imparted to the surface coating layer 6 and the surface thereof. Examples of the additives include fine particles having an average particle diameter of about 0.5 nm to 5 µm. The average particle diameter of the additives is the median diameter as measured using a laser diffraction/scattering particle size distribution analyzer.

The additives may be either inorganic or organic. The additives are also not specifically limited in shape and may be spherical, fibrous, plate-like, amorphous, or flake-like, for example.

Specific examples of the additives include talc, silica, graphite, kaolin, montmorillonite, mica, hydrotalcite, silica gel, zeolite, aluminum hydroxide, magnesium hydroxide, zinc oxide, magnesium oxide, aluminum oxide, neodymium oxide, antimony oxide, titanium oxide, cerium oxide, calcium sulfate, barium sulfate, calcium carbonate, calcium silicate, lithium carbonate, calcium benzoate, calcium oxalate, magnesium stearate, alumina, carbon black, carbon nanotubes, high-melting-point nylons, acrylate resins, crosslinked acrylic, crosslinked styrene, crosslinked polyethylene, benzoguanamine, gold, aluminum, copper, and nickel. These additives may be used alone or in combination. Among these additives, silica, barium sulfate, and titanium oxide are preferred in view of dispersion stability, costs, and the like. Surfaces of the additives may be subjected to various types of surface treatment, such as insulation treatment and dispersibility enhancing treatment.

Examples of methods of forming the surface coating layer 6 include, but are not limited to, applying the resin for forming the surface coating layer 6. When an additive is to be used in the surface coating layer 6, the resin blended with the additive may be applied.

The thickness of the surface coating layer 6 is not specifically limited as long as the above-described function as the surface coating layer 6 is exhibited; for example, it is about 0.5 to 10 µm, and preferably about 1 to 5 µm.

### 3. Method for Producing the Power Storage Device Packaging Material

The method for producing the power storage device packaging material is not specifically limited as long as it produces a laminate in which the layers of the power storage device packaging material of the present invention are laminated. Examples of the method include a method comprising the step of laminating at least the base material layer 1, the barrier layer 3, and the heat-sealable resin layer 4 in this order.

One example of the method for producing the power storage device packaging material of the present invention is as follows: First, a laminate including the base material layer 1, the adhesive agent layer 2, and the barrier layer 3 in this order (the laminate may be hereinafter denoted as the "laminate A") is formed. Specifically, the laminate A can be formed using dry lamination as follows: The adhesive to be used for forming the adhesive agent layer 2 is applied to the base material layer 1 or to the barrier layer 3 whose surface has been optionally subjected to a chemical conversion treatment, using a coating method such as a gravure coating method or a roll coating method, and dried. Then, the barrier layer 3 or the base material layer 1 is laminated thereon, and the adhesive agent layer 2 is cured.

Subsequently, the heat-sealable resin layer 4 is laminated on the barrier layer 3 of the laminate A. When the heat-sealable resin layer 4 is to be laminated directly on the barrier layer 3, the heat-sealable resin layer 4 may be laminated onto the barrier layer 3 of the laminate A, using a method such as thermal lamination or extrusion lamination. When the adhesive layer 5 is to be provided between the barrier layer 3 and the heat-sealable resin layer 4, the adhesive layer 5 and the heat-sealable resin layer 4 can be laminated using, for example, (1) extrusion lamination, (2) thermal lamination, (3) sandwich lamination, or (4) dry lamination. Examples of extrusion lamination (1) include a method in which the adhesive layer 5 and the heat-sealable resin layer 4 are extruded to be laminated on the barrier layer 3 of the laminate A (co-extrusion lamination or tandem lamination). Examples of thermal lamination (2) include a method in which a laminate in which the adhesive layer 5 and the heat-sealable resin layer 4 are laminated is separately formed, and this laminate is laminated on the barrier layer 3 of the laminate A; and a method in which a laminate in which the adhesive layer 5 is laminated on the barrier layer 3 of the laminate A is formed, and this laminate is laminated to the heat-sealable resin layer 4. Examples of sandwich lamination (3) include a method in which the adhesive layer 5 that has been melted is poured between the barrier layer 3 of the laminate A and the heat-sealable resin layer 4 pre-formed into a sheet, and simultaneously the laminate A and the heat-sealable resin layer 4 are bonded via the adhesive layer 5. Examples of dry lamination (4) include a method in which the adhesive for forming the adhesive layer 5 is laminated on the barrier layer 3 of the laminate A by, for example, applying the adhesive onto the barrier layer 3 using solution coating and drying, or further baking, and then the heat-sealable resin layer 4 pre-formed into a sheet is laminated on the adhesive layer 5.

When the surface coating layer 6 is to be provided, the surface coating layer 6 is laminated on the surface of the base material layer 1 opposite to the barrier layer 3. The surface coating layer 6 can be formed by, for example, applying the above-mentioned resin forming the surface coating layer 6 onto the surface of the base material layer 1. The order of the step of laminating the barrier layer 3 on the surface of the base material layer 1 and the step of laminating the surface coating layer 6 on the surface of the base material layer 1 is not specifically limited. For example, the surface coating layer 6 may be formed on the surface of the base material layer 1, and then the barrier layer 3 may be formed on the surface of the base material layer 1 opposite to the surface coating layer 6.

In the manner as described above, a laminate including the optional surface coating layer 6/the base material layer 1/the optional adhesive agent layer 2/the barrier layer 3/the optional adhesive layer 5/the heat-sealable resin layer 4 in this order is formed. The laminate may optionally be further subjected to heat treatment, in order to strengthen the adhesiveness of the optional adhesive agent layer 2 and the optional adhesive layer 5.

In the power storage device packaging material, each layer constituting the laminate may be optionally subjected to surface activation treatment, such as corona treatment, blast treatment, oxidation treatment, or ozone treatment, to thereby improve the processability. For example, ink printability on the surface of the base material layer 1 can be improved by corona-treating the surface of the base material layer 1 opposite to the barrier layer 3.

### 4. Uses of the Power Storage Device Packaging Material

The power storage device packaging material of the present disclosure is used as a package for hermetically sealing and housing a power storage device element comprising a positive electrode, a negative electrode, and an electrolyte. That is, a power storage device can be obtained by housing the power storage device element comprising at least a positive electrode, a negative electrode, and an electrolyte in a package formed of the power storage device packaging material of the present disclosure.

Specifically, the power storage device element comprising at least a positive electrode, a negative electrode, and an electrolyte is covered with the power storage device packaging material of the present disclosure such that a flange (region where the heat-sealable resin layer is brought into contact with another heat-sealable resin layer) can be formed on the periphery of the power storage device element, with a metal terminal connected to each of the positive electrode and the negative electrode protruding outside, and then the heat-sealable resin layers in the flange are heat-sealed to hermetically seal the power storage device element. This provides a power storage device including the power storage device packaging material. When the power storage device element is housed in the package formed of the power storage device packaging material of the present disclosure, the package is formed such that the heat-sealable resin layer region of the power storage device packaging material of the present disclosure is positioned on the inner side (surface in contact with the power storage device element). Two sheets of the power storage device packaging material may be placed over each other with the heat-sealable resin layers opposing each other, and peripheral regions of the power storage device packaging materials placed over each other may be heat-sealed to form a package. Alternatively, as in the example shown in FIG. 8, one sheet of the power storage device packaging material may be folded over to place one surface over the other, and peripheral regions thereof may be heat-sealed to form a package. When the power storage device packaging material is folded over to place one surface over the other, the sides other than the folded sides may be heat-sealed to form a package by three-side sealing, as in the example shown in FIG. 8. Alternatively, the power storage device packaging material may be folded over such that a flange is formed and four-side sealed. Alternatively, the power storage device packaging material may be wrapped around the power storage device element, the heat-sealable resin layers may be sealed to each other to form a heat-sealed region, and a lid or the like may be disposed to close the opening at each of the ends. Moreover, in the power storage device packaging material, a concave portion for housing the power storage device element may be formed by deep drawing or bulging. As in the example shown in FIG. 8, a concave portion may be provided in one sheet of the power storage device packaging material, but not in the other sheet. Alternatively, a concave portion may also be provided in the other sheet of the power storage device packaging material.

The power storage device packaging material of the present disclosure is suitable for use in power storage devices, such as batteries (including condensers and capacitors). The power storage device packaging material of the present disclosure may be used for either primary batteries or secondary batteries, but are preferably used for secondary batteries. While the type of secondary batteries to which the power storage device packaging material of the present disclosure is applied is not limited, examples include lithium ion batteries, lithium ion polymer batteries, all-solid-state batteries, semi-solid-state batteries, quasi-solid-state batteries, polymer batteries, all-polymer batteries, lead storage batteries, nickel-hydrogen storage batteries, nickelcadmium storage batteries, nickel-iron storage batteries, nickel-zinc storage batteries, silver oxide-zinc storage batteries, metal-air batteries, polyvalent cation batteries, condensers, and capacitors. Among these secondary batteries, preferred secondary batteries to which the power storage device packaging material of the present disclosure is applied include lithium ion batteries, lithium ion polymer batteries, and all-solid-state batteries, with all-solid-state batteries being particularly preferred.

### Examples

The present disclosure will be hereinafter described in detail with reference to examples and comparative examples, although the present disclosure is not limited to the examples.

### <Production of Films>

### (Examples 1-5 and Comparative Examples 1-2)

The resin used to form the film of the heat-sealable resin layer in each of Examples 1 and 2 was a resin in which terephthalic acid and 1,4-butanediol, forming a polybutylene terephthalate structure serving as a main component, constituted two structural units, and the polybutylene terephthalate structure had been block-polymerized with a polyether structure as a subcomponent. The polyether structure was introduced into the resin by copolymerization of polytetramethylene ether glycol as a third structural unit with the terephthalic acid. Therefore, the resin forming the film contained the polybutylene terephthalate structure (terephthalic acid and 1,4-butanediol serving as monomer units constituted two structural units) and the polyether structure (polytetramethylene ether glycol serving as a monomer unit constituted one structural unit) and thus, had a structure resulting from copolymerization of a total of three structural units. The resin forming the film of the heat-sealable resin layer in each of Examples 1 and 2 contained terephthalic acid, 1,4-butanediol, and polytetramethylene ether glycol serving as monomer units in a molar ratio (terephthalic acid residue : 1,4-butanediol residue : polytetramethylene ether glycol residue) of 100:95:5. Examples 1 and 2 were different in that the ratio of polytetramethylene ether glycol was higher in Example 1.

The resin used to form the film of the heat-sealable resin layer in each of Examples 3 and 4 was a resin in which the polybutylene terephthalate structure had been block-polymerized with a polyester structure B instead of the polyether structure in Examples 1 and 2. The polyester structure B was introduced into the resin by copolymerization of dodecanedioic acid as a third structural unit with the 1,4-butanediol. Therefore, the resin forming the film contained the polybutylene terephthalate structure (terephthalic acid and 1,4-butanediol serving as monomer units constituted two structural units) and the polyester structure B (dodecanedioic acid serving as a monomer unit constituted one structural unit) and thus, had a structure resulting from copolymerization of a total of three structural units. Examples 3 and 4 were different in that Example 4 used a resin with a single molecular weight, whereas Example 3 used a mixture of resins with two different molecular weights. The resin forming the film of the heat-sealable resin layer in Example 3 contained terephthalic acid, 1,4-butanediol, and dodecanedioic acid serving as monomer units in a molar ratio (terephthalic acid residue : 1,4-butanediol residue : dodecanedioic acid residue) of 100:112:13. The resin forming the film of the heat-sealable resin layer in Example 4 contained terephthalic acid, 1,4-butanediol, and dodecanedioic acid serving as monomer units in a molar ratio (terephthalic acid residue : 1,4-butanediol residue : dodecanedioic acid residue) of 100:110:13.

The resin used in Example 5 was a resin in which the polybutylene terephthalate structure had been block-polymerized with isophthalic acid as the polyester structure B, instead of dodecanedioic acid in Examples 3 and 4. Therefore, the resin of Example 5 contained the polybutylene terephthalate structure (terephthalic acid and 1,4-butanediol serving as monomer units constituted two structural units) and the polyester structure B (isophthalic acid serving as a monomer unit constituted one structural unit) and thus, had a structure resulting from copolymerization of a total of three structural units. The resin forming the film of the heat-sealable resin layer in Example 5 contained terephthalic acid, 1,4-butanediol, and isophthalic acid serving as monomer units in a molar ratio (terephthalic acid residue : 1,4-butanediol residue : isophthalic acid residue) of 100:110:11.

In Comparative Example 1, polybutylene terephthalate (terephthalic acid and 1,4-butanediol constituted two structural units) was prepared as the resin. In Comparative Example 2, polypropylene (propylene and ethylene constituted two structural units) was prepared as the resin.

Next, each of the resins was subj ected to extrusion to produce a film (with a thickness of 50 µm in Examples 1 to 5 and Comparative Example 1, or with a thickness of 80 µm in Comparative Example 2).

The composition of the resin forming the film of the heat-sealable resin layer was confirmed as follows: For GCMS, the derivatization method was employed as a pre-treatment, and then GCMS measurement was performed. Using a 450°C simultaneous derivatization method, about 0.1 mg of the sample was placed in a sample cup, and 1 µl of TMAH was added dropwise, then the sample was measured under the conditions as set forth below to qualitatively analyze the structure contained in the resin. 7890A/5975C (Agilent Technologies) was used as the apparatus, and the pyrolysis oven AS-1020E (Frontier Lab) was used. InertCap 5MS/Sil was used as the column. The heating conditions were as follows: 5 minutes of holding at 50°C, heating at 10°C/min, and 3 minutes of holding at 320°C. The split ratio was 1:50. Next, for NMR, as a pre-treatment, the sample was dissolved in HFIP to a concentration of about 4 wt% and diluted two-fold with CDCl₃. NMR measurement was performed using the apparatus, AVANCE III HD (BRUKER), under the following conditions, to identify the structure: nuclide: 1H; solvent: CDCl₃ + HFIP (1:1); room temperature; number of accumulations: 64.

### <Production of Packaging Materials>

As a base material layer, a polyethylene terephthalate film (with a thickness of 25 µm in Examples 1 to 5 and Comparative Example 1) that had been subjected to corona treatment on a bonding surface was prepared. In Comparative Example 2, as a base material layer, a film was prepared by laminating a polyethylene terephthalate film (thickness: 12 µm) and a nylon film (thickness: 15 µm) with a two-component curable urethane adhesive (the film was used with the polyethylene terephthalate film facing the outer side). As a barrier layer, an aluminum alloy foil (JIS H4160: 1994 A8021H-O, thickness: 40 µm) was prepared. As a heat-sealable resin layer, each of the films as described above was used. Next, the base material layer and the barrier layer were bonded with a two-component curable urethane adhesive (a polyester polyol and an alicyclic isocyanate compound) using dry lamination, to prepare a laminate having the base material layer/the adhesive agent layer/the barrier layer in order.

Next, the barrier layer side of the resulting laminate was bonded to the film with a two-component curable urethane adhesive (a polyester polyol and an alicyclic isocyanate compound), using dry lamination, to laminate the adhesive layer (4 µm)/the heat-sealable resin layer (with a thickness of 50 µm in Examples 1 to 5 and Comparative Example 1, or with a thickness of 80 µm in Comparative Example 2) on the barrier layer. Next, the resulting laminate was aged and heated to give a power storage device packaging material formed of a laminate having the base material layer/the adhesive agent layer/the barrier layer/the adhesive layer/the heat-sealable resin layer (film) in this order.

### <Measurement of Melting Peak Temperature>

For the resin forming the film, melting peak temperature was measured according to JIS K 7121: 2012 (Testing Methods for Transition Temperatures of Plastics) (Supplement 1 to JIS K 7121: 1987)). The measurement was performed with a differential scanning calorimeter (DSC, the differential scanning calorimeter Q200 from TA Instruments Inc.). The measurement sample was held at -50°C for 15 minutes and then heated from -50°C to 300°C at a heating rate of 10°C/min to measure a first melting peak temperature P (°C), and thereafter held at 300°C for 2 minutes. Next, the sample was cooled from 300°C to -50°C at a cooling rate of 10°C/min and held for 15 minutes. The sample was further heated from -50°C to 300°C at a heating rate of 10°C/min to measure a second melting peak temperature Q (°C). The flow rate of nitrogen gas was 50 ml/min. Using the above-described procedure, the first measured melting peak temperature P (°C) and the second measured melting peak temperature Q (°C) were obtained, and the first measured melting peak temperature was determined as the melting peak temperature.

### <Measurement of Glass Transition Temperature (Tg)>

The glass transition temperature of the resin forming the film was measured by dynamic viscoelasticity measurement (DMA). The measurement was performed using Rheogel-E4000 from UBM. The distance between the chucks was set to 10 mm, and a piece of the film cut to a width of 5 mm and a length of 20 mm was mounted. The measurement conditions were as follows: heating from -30°C to 250°C at a heating rate of 5°C/min; frequency: 10 Hz; static load: 70 g; and strain: 5 µm. The peak temperature of the loss sine (tan δ) obtained by dividing the loss modulus by the storage modulus as measured under these conditions was determined as the glass transition temperature.

### <Measurement of Tensile Rupture Elongation (at -30°C, 23°C, 120°C, or 150°C) of the Film>

For each film, tensile rupture elongation was measured. The measurement was performed with a tensile testing machine (AG-Xplus (trade name) from Shimadzu Corporation), using the method according to JIS K7127. The test sample width was the dumbbell shape according to JIS-K 6251-7, the gauge length was 15 mm, the tensile speed was 50 mm/min, and the test environments were each -30°C, 23°C, 120°C, or 150°C. Three measurements were made in each test environment, and the average value of the three measured values was determined as the tensile rupture elongation. The results are shown in Table 1.

### [Measurement of Indentation Modulus]

The laminate was cut out, and the indentation modulus was measured from the heat-sealable resin layer side. Indentation modulus was measured according to ISO 14577:2015, using the following method for measuring the indentation modulus: For the surface of the sample, the indentation modulus was measured using an ultra-low loaded hardness tester equipped with a Vickers indenter (square pyramidal diamond indenter having an angle between opposite faces of 136°), in an environment at about 23°C and about 60% RH. The measurement was performed with an indentation speed of 0.1 µm/sec, an indentation depth of 2 µm, a holding time of 5 seconds, and a drawing speed of 0.1 µm/sec. The ultra-low loaded hardness tester was PICODENTOR HM500 (available from Fischer Instruments K.K.). At least five samples were measured, and the average of the measured values was determined as the value of indentation modulus for the conditions. An adsorption plate was used to fix the sample. The results are shown in Table 1.

### [Evaluation of Sealing Strength (in a -30°C, 23°C, 120°C, or 150°C Environment)]

The sealing strength of the packaging material at a measurement temperature of -30°C, 23°C, 120°C, or 150°C was measured according to JIS K7127:1999, as follows: A test sample was prepared by cutting the packaging material into a strip with a width of 15 mm in the TD direction. Specifically, as shown in FIG. 9, first, each packaging material was cut into 60 mm (TD direction) × 200 mm (MD direction) (FIG. 9a). Subsequently, the packaging material was folded in half in the MD direction at the position of the fold P (midpoint in the MD direction), in such a manner that the heat-sealable resin layers were opposed to each other (FIG. 9b). At about 10 mm inward in the MD direction from the fold P, the heat-sealable resin layers were heat-sealed to each other at a seal width of 7 mm and a temperature of 240°C, using a surface pressure and a sealing time such that the thickness of the heat-sealable resin layers decreased to 80 ± 5% of the thickness before sealing (FIG. 9c). In FIG. 9c, the shaded region S is the heat-sealed region. Subsequently, the packaging material was cut in the MD direction (cut at the positions indicated by the double-dotted lines in FIG. 9d) to give a width of 15 mm in the TD direction to give a specimen 13 (FIG. 9e). Subsequently, after the specimen 13 was allowed to stand at each measurement temperature for 2 minutes, the heat-sealable resin layers at the heat-sealed region were peeled at a speed of 300 mm/min, using a tensile testing machine (AG-Xplus (trade name) from Shimadzu Corporation), in each measurement temperature environment (FIG. 10). The maximum strength at the time of peeling was defined as the sealing strength (N/15 mm). The distance between the chucks was 50 mm. Evaluation criteria for sealing strength were as shown below. Ratings A and B are acceptable. The results are shown in Table 1.

### (Evaluation Criteria for Sealing Strength)

A: Having a sealing strength of 80 N/15 mm or more at measurement temperatures of -30 and 23°C. Having a sealing strength of 50 N/15 mm or more at measurement temperatures of 120 and 150°C.
B: Having a sealing strength of 40 N/15 mm or more and less than 80 N/15 mm at measurement temperatures of -30 and 23°C. Having a sealing strength of 30 N/15 mm or more and less than 50 N/15 mm at measurement temperatures of 120 and 150°C.
C: Having a sealing strength of less than 40 N/15 mm at measurement temperatures of -30 and 23°C. Having a sealing strength of less than 30 N/15 mm at measurement temperatures of 120 and 150°C.

**[Table 1]**

| Table 1 | Heat-Sealable Resin Layer (Sealant Film) | | | | | | | | | Power Storage Device Packaging Material | | | |
|---|---|---|---|---|---|---|---|---|---|---|---|---|---|
| | Melting Peak Temperature (°C) | Tg (°C) | Main Component | Subcomponent | Tensile Rupture Elongation (%) | | | | Indentation Modulus (GPa) | Evaluation of Sealing Strength | | | |
| | | | | | - 30°C | 23°C | 120°C | 150°C | | - 30°C | 23°C | 120°C | 150°C |
| Ex. 1 | 213.7 | 25.0 | Polyester Structure A (PBT Structure) | polyether Structure | 343 | 789 | 810 | 873 | 0.72 | A | A | A | B |
| Ex. 2 | 214.6 | 38.4 | Polyester Structure A (PBT Structure) | Polyether Structure | 377 | 646 | 802 | 843 | 2.6 | A | A | A | B |
| Ex. 3 | 201.9 | 44.8 | Polyester Structure A (PBT Structure) | Polyester Structure B (Derived from Dodecanedioic Acid) | 326 | 559 | 912 | 912 | 0.84 | A | A | A | A |
| Ex. 4 | 202.0 | 41.3 | Polyester Structure A (PBT Structure) | Polyester Structure B (Derived from Dodecanedioic Acid) | 257 | 620 | 902 | 968 | 0.83 | A | A | A | A |
| Ex. 5 | 204.3 | 62.0 | Polyester Structure A (PBT Structure) | Polyester Structure B (Derived from Isophthalic Acid) | 9 | 7 | 712 | 807 | 2.5 | B | B | B | A |
| Comp. Ex. 1 | 221.0 | 69.8 | Polyester Structure A (PBT Structure) | - | - | - | 538 | 659 | 2.6 | C | C | B | C |
| Comp. Ex. 2 | 140.6 | 0.0 | PP **Structure** | - | - | - | >1000 | - | - | B | A | B | C |

In Table 1, "*>1000*" indicates that no rupture occured even at a measurement limit of 1000%. The tensile rupture elongation at 150°C for Comparative Example 2 was not measurable because the measurement temperature was above the melting point of polypropylene. The tensile rupture elongations at -30 and 23°C for Comparative Examples 1 and 2 were not measured, and the indentation modulus for Comparative Example 2 was not measured.

As described above, the present disclosure provides aspects of the invention as set forth below:
Item 1. A power storage device packaging material, comprising a laminate comprising at least a base material layer, a barrier layer, and a heat-sealable resin layer in this order,
   wherein the heat-sealable resin layer comprises a film,
   the film is formed of a resin containing three or more structural units, and
   the film has a melting peak temperature of 170°C or more.
Item 2. The power storage device packaging material according to item 1, wherein the resin forming the film contains a polyester structure A.
Item 3. The power storage device packaging material according to item 2, wherein the polyester structure A has at least a polybutylene terephthalate structure.
Item 4. The power storage device packaging material according to item 2 or 3, wherein the resin forming the film additionally has at least one selected from the group consisting of a polyether structure and a polyester structure B.
Item 5. The power storage device packaging material according to item 4, wherein the polyester structure B is a polyester structure resulting from polycondensation of a polyol forming the polyester structure A and at least one dicarboxylic acid selected from the group consisting of isophthalic acid, sebacic acid, and dodecanedioic acid.
Item 6. The power storage device packaging material according to item 4 or 5, wherein the polyether structure is a polyether structure derived from at least one selected from the group consisting of polytetramethylene ether glycol and neopentyl glycol.
Item 7. The power storage device packaging material according to any one of items 1 to 6, wherein an indentation modulus as measured from the heat-sealable resin layer side of the laminate is 0.3 GPa or more.
Item 8. The power storage device packaging material according to any one of items 1 to 7, wherein the power storage device packaging material is for use with an all-solid-state battery, a semi-solid-state battery, a quasi-solid-state battery, a polymer battery, or an all-polymer battery.
Item 9. A film formed of a resin containing three or more structural units,
   the film having a melting peak temperature of 170°C or more.
Item 10. The film according to item 9, wherein the resin forming the film contains a polyester structure A.
Item 11. The film according to item 10, wherein the polyester structure A has at least a polybutylene terephthalate structure.
Item 12. The film according to item 10 or 11, wherein the resin forming the film additionally has at least one selected from the group consisting of a polyether structure and a polyester structure B.
Item 13. The film according to item 12, wherein the polyester structure B is a polyester structure resulting from polycondensation of a polyol forming the polyester structure A and at least one dicarboxylic acid selected from the group consisting of isophthalic acid, sebacic acid, and dodecanedioic acid.
Item 14. The film according to item 12 or 13, wherein the polyether structure is a polyether structure derived from at least one selected from the group consisting of polytetramethylene ether glycol and neopentyl glycol.
Item 15. The film according to any one of items 9 to 14, wherein the film has an indentation modulus of 0.3 GPa or more.
Item 16. The film according to any one of items 9 to 15, wherein the film is used as a heat-sealable resin layer of a power storage device packaging material.
Item 17. A method for producing a power storage device packaging material, comprising the step of obtaining a laminate in which at least a base material layer, a barrier layer, and a heat-sealable resin layer are laminated in this order,
   wherein the heat-sealable resin layer comprises a film,
   the film is formed of a resin containing three or more structural units, and
   the film has a melting peak temperature of 170°C or more.
Item 18. The method according to item 17, wherein the power storage device packaging material is for use with an all-solid-state battery, a semi-solid-state battery, a quasi-solid-state battery, a polymer battery, or an all-polymer battery.
Item 19. A power storage device comprising a power storage device element comprising at least a positive electrode, a negative electrode, and an electrolyte,
   wherein the power storage device element is housed in a package formed of the power storage device packaging material according to any one of items 1 to 8.

### Reference Signs List

1: base material layer
2: adhesive agent layer
3: barrier layer
4: heat-sealable resin layer
5: adhesive layer
6: surface coating layer
10: power storage device packaging material
13: specimen
41: first layer
42: second layer
43: third layer

## Claims

1. A power storage device packaging material, comprising a laminate comprising at least a base material layer, a barrier layer, and a heat-sealable resin layer in this order,
wherein the heat-sealable resin layer comprises a film,
the film is formed of a resin containing three or more structural units, and
the film has a melting peak temperature of 170°C or more.

2. The power storage device packaging material according to claim 1, wherein the resin forming the film contains a polyester structure A.

3. The power storage device packaging material according to claim 2, wherein the polyester structure A has at least a polybutylene terephthalate structure.

4. The power storage device packaging material according to claim 2 or 3, wherein the resin forming the film additionally has at least one selected from the group consisting of a polyether structure and a polyester structure B.

5. The power storage device packaging material according to claim 4, wherein the polyester structure B is a polyester structure resulting from polycondensation of a polyol forming the polyester structure A and at least one dicarboxylic acid selected from the group consisting of isophthalic acid, sebacic acid, and dodecanedioic acid.

6. The power storage device packaging material according to claim 4 or 5, wherein the polyether structure is a polyether structure derived from at least one selected from the group consisting of polytetramethylene ether glycol and neopentyl glycol.

7. The power storage device packaging material according to any one of claims 1 to 3, wherein an indentation modulus as measured from the heat-sealable resin layer side of the laminate is 0.3 GPa or more.

8. The power storage device packaging material according to any one of claims 1 to 3, wherein the power storage device packaging material is for use with an all-solid-state battery, a semi-solid-state battery, a quasi-solid-state battery, a polymer battery, or an all-polymer battery.

9. A film formed of a resin containing three or more structural units,
the film having a melting peak temperature of 170°C or more.

10. The film according to claim 9, wherein the resin forming the film contains a polyester structure A.

11. The film according to claim 10, wherein the polyester structure A has at least a polybutylene terephthalate structure.

12. The film according to claim 10 or 11, wherein the resin forming the film additionally has at least one selected from the group consisting of a polyether structure and a polyester structure B.

13. The film according to claim 12, wherein the polyester structure B is a polyester structure resulting from polycondensation of a polyol forming the polyester structure A and at least one dicarboxylic acid selected from the group consisting of isophthalic acid, sebacic acid, and dodecanedioic acid.

14. The film according to claim 12 or 13, wherein the polyether structure is a polyether structure derived from at least one selected from the group consisting of polytetramethylene ether glycol and neopentyl glycol.

15. The film according to any one of claims 9 to 11, wherein the film has an indentation modulus of 0.3 GPa or more.

16. The film according to any one of claims 9 to 11, wherein the film is used as a heat-sealable resin layer of a power storage device packaging material.

17. A method for producing a power storage device packaging material, comprising the step of obtaining a laminate in which at least a base material layer, a barrier layer, and a heat-sealable resin layer are laminated in this order,
wherein the heat-sealable resin layer comprises a film,
the film is formed of a resin containing three or more structural units, and
the film has a melting peak temperature of 170°C or more.

18. The method according to claim 17, wherein the power storage device packaging material is for use with an all-solid-state battery, a semi-solid-state battery, a quasi-solid-state battery, a polymer battery, or an all-polymer battery.

19. A power storage device comprising a power storage device element comprising at least a positive electrode, a negative electrode, and an electrolyte,
wherein the power storage device element is housed in a package formed of the power storage device packaging material according to any one of claims 1 to 3.
